(19)

Europäisches Patentamt
European Patent Office
Office européen des brevets

(11) EP 2 249 268 A2

(12) EUROPEAN PATENT APPLICATION

(43) Date of publication:
10.11.2010 Bulletin 2010/45

(51) Int Cl.:
G06F 17/50 (2006.01)     G05B 19/418 (2006.01)

(21) Application number: 10250823.1

(22) Date of filing: 23.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 27.04.2009 JP 2009107935

(71) Applicant: Kabushiki Kaisha Toshiba
Minato-ku
Tokyo (JP)

(72) Inventors:
• Okada, Yuuki
Tokyo 105-8001 (JP)
• Shirakawa, Masakazu
Tokyo 105-8001 (JP)

(74) Representative: Maury, Richard Philip
Marks & Clerk LLP
90 Long Acre
London
WC2E 9RA (GB)

(54) Layout design support system, method, and program

(57)     According to one embodiment, a layout design support system has a layout editing unit which edits equipment arrangement data, equipment connection element data and the other data, and depicts the edited data, and a storage unit which storage such data. The storage unit stores equipment arrangement data that includes not only equipment specification data, and arrangement coordinate data and size data of each equipment, but also piece number of each piece configuring the equipment, and stores equipment connection element data that includes connection name, equipment name of upstream and downstream connection destination equipments, piece number and port of the equipments. The layout editing unit edits the equipment arrangement data or equipment connection element data at the level of the piece in accordance with an accepted edit instruction.

FIG. 1

EP 2 249 268 A2

## Description

This application is based upon and claims the benefit of priority from Japanese Patent Application No. 2009-107935, filed April 27, 2009; the entire contents of which are incorporated herein by reference.

FIELD

Embodiments described herein relate generally to a technique for supporting a layout design process which includes the arrangement of a building and a plurality of equipments within a layout range space of a plant and connections between the equipments, using a computer.

BACKGROUND

In general, layout design of various types of plant facilities, such as chemical plants and electric power plants for generating thermal power, nuclear power, hydroelectric power, and so on, is performed on a plant design enterprise side to decide, for example, the arrangement of buildings, equipments, piping, cables, and so on. This layout design process is performed such that the process fits various conditions relating to the design content and various professional conditions. As a technique relating to such layout design process, in general, a layout design support system is used, which has a unit that can edit an equipment element and equipment connection element in two-dimension or three-dimension.

For example, a technique exists, in which a screen for editing layout design data is displayed, and building data, equipment arrangement data, equipment connection element data, equipment connection path data, and use-specified range data, which are of five data types classified from layout design data, are edited individually and separately.

In addition, a technique exists, in which various design conditions and objective conditions are set and an optimization calculation is performed in accordance with such conditions to design a layout of equipment arrangement.

In addition, a technique exists, in which equipments, piping, and so on, for which a space has been set in advance with taking account of dismantlement and installation, are provided at equipment arrangement positions in a reference coordinate system in accordance with a prescribed arrangement rule with taking account of past data.

In addition, a technique exists, in which efficiency of working processes for various equipments and piping is evaluated to decide the working content based on the evaluation result, and a technique exists, in which an automatic layout system has a unit performing a three-dimensional display process and generate a design route automatically.

In addition, a technique exists, in which the influence of design is evaluated and the influence level can be checked, a technique exists, in which equipments, piping, and so on, are evaluated in advance for each arrangement and provided in the order of priority in accordance with the evaluation result, and a technique exists, in which an arrangement view is divided and a layout is displayed with referring to the divided arrangement view per unit.

In addition, a technique exists, in which a layout data is displayed using actions of a human model represented in three-dimension, and a technique exists, in which building data is represented to search an optimum route.

The conventional techniques as described above, for example, provide a system for supporting a layout design process which can intuitively and comprehensively grasp by displaying in two-dimension a concrete route designed with taking account of various conditions. However, this technique can not represent a detailed configuration of equipments, and can not recognize connections between equipments in three-dimension.

The conventional techniques as described above, for example, show a system for supporting a layout design process. However, these techniques provide no system for supporting a layout design process which can intuitively and comprehensively grasp by displaying in two-dimension a concrete route designed with taking account of various conditions. In Patent Documents 2 to 10, a three-dimensional display process is performed, but there is disclosed no technique for handling a detailed configuration of equipments and connections and arrangement space thereof in three-dimension.

BRIEF DESCRIPTION OF THE DRAWINGS

Fig. 1 is a block diagram showing an embodiment of a layout design support system;
Fig. 2 is a view showing a structure example of equipment arrangement data stored in a storage unit;
Fig. 3 is a conceptual view showing an image of equipment data recognized by a layout design support system;
Fig. 4 is a flowchart showing an outline of layout editing process performed by a layout design support system;
Figs. 5A and 5B are views showing a functional configuration example of an editing control unit for building data in a building data editing unit, Fig. 5A showing an editing control unit for building base line data, and Fig. 5B showing an editing control unit for building arrangement data;

Figs. 6A and 6B are views showing a functional configuration example of a depiction control unit for building data in a building data editing unit, Fig. 6A showing a depiction control unit for building base line data, and Fig. 6B showing a depiction control unit for building arrangement data;

Fig. 7 is a flowchart showing a flow of layout design process when base line data stored in building database, is read and a base line is depicted on a depiction screen;

Fig. 8 is a flowchart showing a flow of layout design process when building arrangement data stored in building database, is read and a building is depicted on a depiction screen;

Fig. 9 is a view showing a specific screen display example of an editing screen for building data in a building data editing unit;

Figs. 10A and 10B are views showing a functional configuration example of an editing control unit for equipment arrangement data in an equipment arrangement data editing unit, Fig. 10A showing an editing control unit for equipment arrangement data, and Fig. 10B showing an editing control unit for equipment attribute data;

Fig. 11 is a view showing a functional configuration example of a depiction control unit for equipment arrangement data in an equipment arrangement data editing unit;

Fig. 12 is a flowchart showing a flow of layout design process when equipment arrangement data stored in equipment arrangement database, is read and an equipment is depicted on a depiction screen;

Fig. 13 is a view showing a specific screen display example of an editing screen for equipment arrangement data in an equipment arrangement data editing unit;

Fig. 14 is a view showing a specific screen display example of an editing screen for equipment attribute data in an equipment arrangement data editing unit;

Figs. 15A and 15B are views showing an interference prohibition area information editing process performed by an equipment arrangement data editing unit, Fig. 15A being a schematic view showing an interference prohibition area for an equipment, and Fig. 15B being a view showing a specific screen display example of an editing screen for an interference prohibition area information;

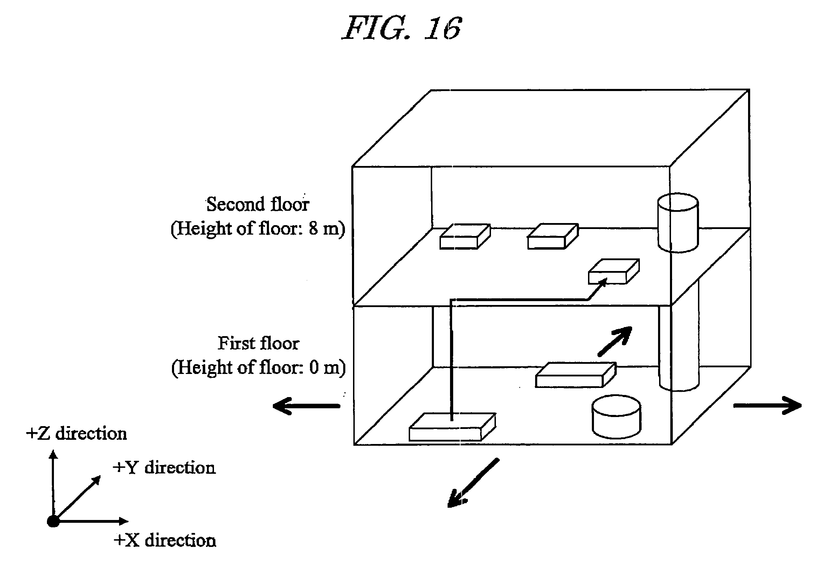

Fig. 16 is a schematic view showing a process of equipment movement unit in an equipment arrangement data editing unit;

Fig. 17 is a view showing a specific screen display example (building with a single floor) of a depiction screen for equipment arrangement data in an equipment arrangement data editing unit;

Fig. 18 is a schematic view showing a layout (building with a plurality of floors) having been depicted by an equipment arrangement data editing unit;

Fig. 19 is a schematic view showing a layout (building with a plurality of floors) having been depicted by an equipment arrangement data editing unit;

Fig. 20 is a view showing a specific screen display example (building with a plurality of floors) of a depiction screen for equipment arrangement data in an equipment arrangement data editing unit;

Figs. 21A and 21B are views showing a process when displaying an equipment by an equipment arrangement data editing unit, Fig. 21A being a schematic view showing an equipment configured from a plurality of pieces, and Fig. 21B being a view showing a specific screen display example of a depiction screen for an equipment arrangement data;

Figs. 22A and 22B are views showing a functional configuration example of an editing control unit for equipment connection element data in an equipment connection element data editing unit, Fig. 22A showing an editing control unit for equipment connection element data, and Fig. 22B showing an editing control unit for connection attribute data;

Fig. 23 is a view showing a functional configuration example of a depiction control unit for equipment connection element data in an equipment connection element data editing unit;

Fig. 24 is a flowchart showing a flow of layout design process when equipment connection element data stored in equipment connection element database, is read and an equipment connection element is depicted on a depiction screen;

Fig. 25 is a view showing a specific screen display example of an editing screen for equipment connection element data in an equipment connection element data editing unit;

Fig. 26 is a view showing a specific screen display example of an editing screen for connection attribute data in an equipment connection element data editing unit;

Fig. 27 is a schematic view showing an equipment connection element (display using XYZ components) having been depicted by an equipment connection element data editing unit;

Fig. 28 is a view showing a specific screen display example (equipment connection element between equipments) of a depiction screen for equipment connection element data in an equipment connection element data editing unit;

Fig. 29 is a schematic view showing an equipment connection element (building with a plurality of floors) having been depicted by an equipment connection element data editing unit;

Fig. 30 is a schematic view showing an equipment connection element (building with a plurality of floors) having been depicted by an equipment connection element data editing unit;

Fig. 31 is a view showing a specific screen display example (building with a plurality of floors) of a depiction screen for equipment connection element data in an equipment connection element data editing unit;

Fig. 32 is a view showing a specific screen display example (display of a connection destination equipment outside a display range) of a depiction screen for equipment connection element data in an equipment connection element data editing unit;

Fig. 33 is a view showing a specific screen display example (display of an interference prohibition area inside a display range) of a depiction screen for equipment connection element data in an equipment connection element data editing unit;

Fig. 34 is a view showing a functional configuration example of a comparison unit (for cost calculation) in an evaluation calculation unit;

Fig. 35 is a schematic view showing a cost calculation process of a comparison unit (for cost calculation) in an evaluation calculation unit;

Fig. 36 is a view showing a functional configuration example of a comparison unit (for interference part calculation) in an evaluation calculation unit;

Fig. 37 is a schematic view showing a cost calculation process of a comparison unit (for calculating the area of interference part) in an evaluation calculation unit; and

Fig. 38 is a schematic view showing a cost calculation process of a comparison unit (for calculating the volume of interference part) in an evaluation calculation unit.

## DETAILED DESCRIPTION

In general, according to one embodiment, a layout design support system has a layout editing unit which edits equipment arrangement data, equipment connection element data and the other data, and depicts the edited data, and a storage unit which storage such data. The storage unit stores equipment arrangement data that includes not only equipment specification data, and arrangement coordinate data and size data of each equipment, but also piece number of each piece configuring the equipment, and stores equipment connection element data that includes connection name, equipment name of upstream and downstream connection destination equipments, piece number and port of the equipments. The layout editing unit edits the equipment arrangement data or equipment connection element data at the level of the piece in accordance with an accepted edit instruction.

[Embodiment]

[1. Outline of System Configuration]

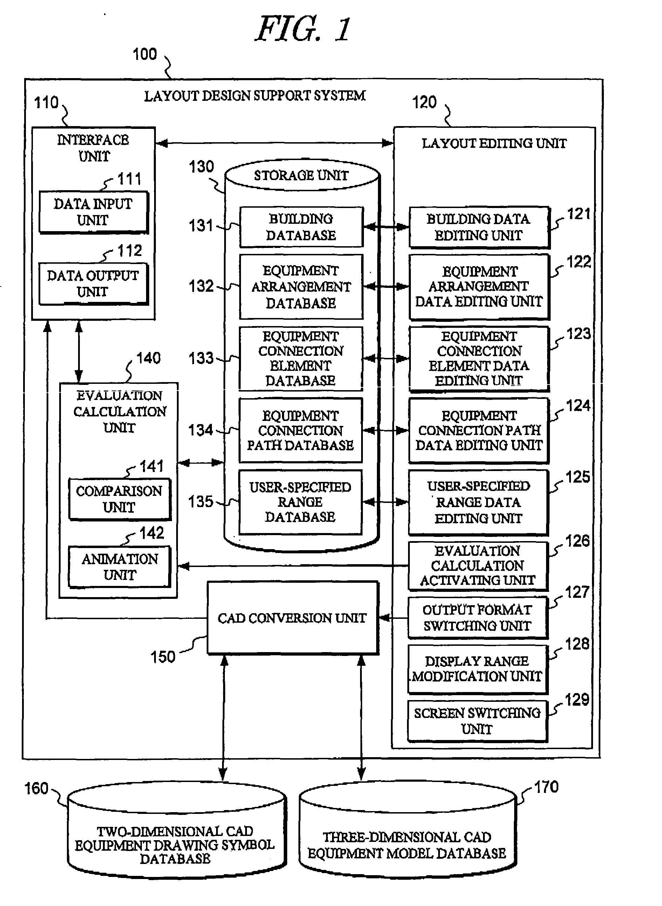

An outline of a system configuration of this embodiment is explained below, referring to Fig. 1. Here, Fig. 1 is a block diagram showing an embodiment of a layout design support system.

As shown in Fig. 1, a layout design support system 100 according to this embodiment is constituted by an interface unit 110, a layout editing unit 120, a storage unit 130, an evaluation calculation unit 140, and a CAD conversion unit 150, all of which are realized on a computer. Each unit 110, 120, 130, 140, 150 will be described in detail below.

[1.1. Interface Unit]

The interface unit 110 is constituted by a data input unit 111 and a data output unit 112. Here, the data input unit 111 is an input apparatus such as a mouse or keyboard for inputting various instructions and data into the computer in accordance with a user operation, and the data output unit 112 is an output apparatus such as a display or printer for outputting in display or other method, various data which includes data input through the data input unit 111, data stored in the storage unit 130, and results processed by the layout editing unit 120, evaluation calculation unit 140, and CAD conversion unit 150 to the user. In other words, the interface unit 110 is a part for performing information exchange between the computer and the user, and is typically known as a "user interface" or the like.

[1.2. Layout Editing Unit]

The layout editing unit 120 serves as means for causing the interface unit 110 to display a layout design data editing screen, receiving an edit instruction input on the screen, and editing the layout design data in accordance with the edit instruction. In this embodiment, the layout editing unit 120 uses classified data into five data types, namely building data, equipment arrangement data, equipment connection element data, equipment connection path data, and user-specified range data, and edits data belonging to each data type independently to generate layout design data.

Note that the "building data" relates to the base lines and arrangement of the buildings, while the "equipment arrangement data" relates to the arrangement of the equipments. The "equipment connection element data" and "equipment connection path data" are sub-types of "equipment connection data" relating to the physical connections between equipments. The "equipment connection element data" relates to the constitution of the physical connection elements (piping, cables, and so on) of the equipments, while the "equipment connection path data" relates to the constitution of auxiliary elements (racks, trenches, and so on) which form paths for the equipment connection elements. The "user-specified range data" relates to a range (total material amount range, CAD data conversion range, and so on) specified by the user for a particular purpose.

Here, the layout editing unit 120 comprises a building data editing unit 121, an equipment arrangement data editing unit 122, an equipment connection element data editing unit 123, an equipment connection path data editing unit 124, and a user-specified range data editing unit 125, each of which serves as an individual editing unit for editing data of one of the five data types, i.e. building data, equipment arrangement data, equipment connection element data, equipment connection path data, and user-specified range data, independently. Among these units, the building data editing unit 121, equipment arrangement data editing unit 122, and equipment connection element data editing unit 123, are what characterized this embodiment, so the detail thereof is explained below, while the detailed explanation of the equipment connection path data editing unit 124 and user-specified range data editing unit 125 is omitted because the configuration thereof is the same as that of the Patent Document 1.

Note that the individual editing units 121 to 125 each comprise an editing control unit which causes the interface unit 110 to display an editing screen for editing data, and accepts various editing instruction from a user to edit data, and a depiction control unit which causes the interface unit 110 to display a depiction screen for depicting data, and depict the data edited by the editing control unit. In other words, the editing control unit displays an input/select/display field or operation image element relating to an editing subject item of the layout design data, accepts an edit instruction and data input corresponding to a user operation, and edits the layout design data in accordance with the accepted information. Subsequently, the depiction control unit depicts the edited layout design data on a depiction screen.

Note that in this specification, an "operation image element" denotes an individual image element serving as an operation unit which performs input or selection in accordance with a user operation, such as an operation button, a cursor, an input window, and so on. Further, the term "input/select/display field" or "select/display field" is a wide concept denoting a functional unit which performs input or selection and displays the content thereof in accordance with a user operation, and which includes an operation button, a cursor, an input window, and an item name display for realizing a specific function.

The layout editing unit 120 further comprises an evaluation calculation activating unit 126, an output format switching unit 127, a display range modification unit 128, and a screen switching unit 129. Here, the evaluation calculation activating unit 126 causes the evaluation calculation unit 140 to begin evaluation calculation process in accordance with an instruction input via the input/select/display field or operation image element displayed on the editing screen or depiction screen. A specific evaluation calculation process is described later.

The output format switching unit 127 controls the CAD conversion unit 150 in accordance with an instruction input via the input/select/display field or operation image element displayed on the editing screen or depiction screen to switch the output format of the depiction screen to a two-dimensional CAD drawing or a three-dimensional CAD model.

The display range modification unit 128, in accordance with an instruction input via the input/select/display field or operation image element displayed on the editing screen or depiction screen, switches the buildings and arrangement displayed on the depiction screen and enlarges or reduces the depiction screen through the editing control unit and depiction control unit of the individual editing units 121 to 125. As described later, this embodiment includes a mode in which the layout range of depiction screen is restricted in the vertical direction, so that the display range modification unit 128 contributes to the adjustment of the depiction screen in such case.

The image switching unit 129 switches between the editing screen and depiction screen in accordance with an instruction input via the input/select/display field or operation image element displayed on the editing screen or depiction screen.

Note that specifically, the layout editing unit 120 is realized by the main memory of the computer, a specialized layout design editing program stored therein, a CPU controlled by the program, and so on.

[1.3. Storage Unit]

The storage unit 130 comprises a building database 131, an equipment arrangement database 132, an equipment connection element database 133, an equipment connection path database 134, and a user-specified range database 135 serving as databases for storing individually the editing results of the building data, equipment arrangement data, equipment connection element data, equipment connection path data, and user-specified range data edited by the individual editing units 121 to 125 of the layout editing unit 120.

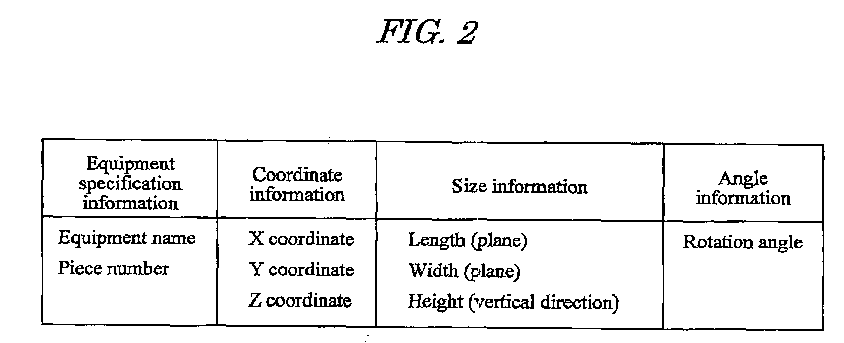

In detail, for example, in the equipment arrangement database 132 of this embodiment, as shown in Fig. 2, equipment specification, equipment coordinates, size and angle are set for each equipment. In more detail, as the equipment specification, in addition to equipment name, piece numbers of pieces configuring the equipment. Further, as the equipment specification, besides the piece numbers, detailed equipment name and building name of the building where the equipment is provided, are set.

As the equipment arrangement coordinates, Z coordinate in the vertical direction is set in addition to X coordinate and Y coordinate. As the equipment size, the height equivalent to the length in the vertical direction is set in addition to the length and width on a horizontal plane. As the angle, an equipment arrangement angle is set at a prescribed rotation angle, which is equivalent to a rotation angle when the longitudinal axis of an equipment is rotated about the vertical axis passing through the arrangement coordinate point of the equipment.

In addition, in the equipment connection element database 133, connection name, connection name of the equipment connection element, equipment name of upstream and down stream connection destination equipments, piece number and port of the equipments.

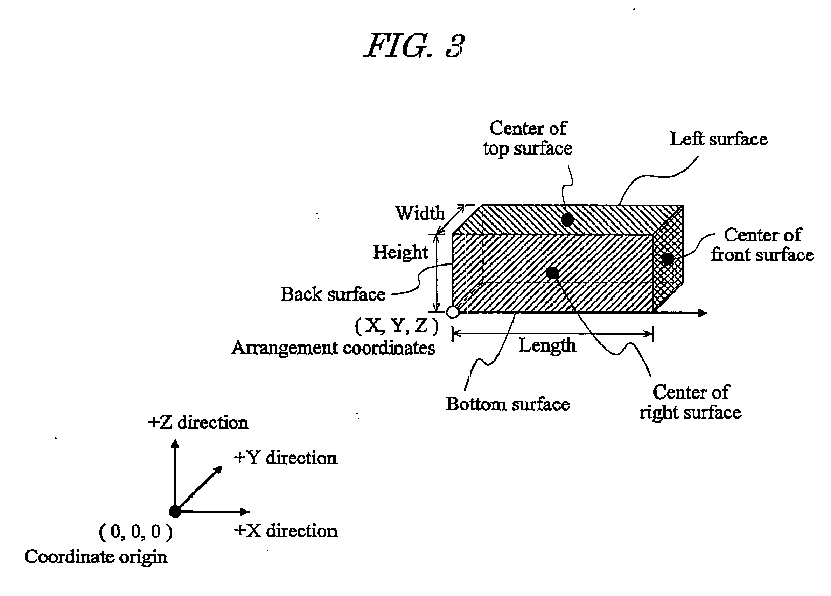

Here, a process is explained below, in which data such as the equipment specification and arrangement coordinate are read from the equipment arrangement database 132, and used for generating an equipment image, referring to Fig. 3. In more detail, the arrangement coordinates (white-filled circle in Fig. 3) and size are read from the equipment arrangement database 132, so that an equipment image as shown in Fig. 3 is simulated which is displayed in two-dimensional, but recognized as a rectangular parallelepiped in three-dimensional in terms of data.

In more detail, the length direction on a horizontal plane is decided based on the arrangement coordinates and angle of the equipment, and each surface size of a rectangular parallelepiped is decided based on the equipment size, so that, as shown in Fig. 3, a rectangular parallelepiped is simulated which is constituted by six surfaces of front and back surfaces at both ends in the length direction, right and left surfaces in the width direction, and top and bottom surfaces in the vertical direction.

Note that the center of each surface configuring the equipment (black-filled circle in Fig. 3) is used as a representative point, which is equivalent to connection part for connecting to connection element such as piping and cable as described later. The representative points are displayed in two-dimension, but recognized in three-dimensional for evaluation calculation.

Examples of the specific storage formats that may be used to store the layout design data in the various databases 131 to 135 of the storage unit 130 include a spreadsheet format, a database format, and a text file format. In other words, any storage format may be employed for the layout design data as long as the format, such as the data field name, is appropriate for the layout editing unit 120 and can be read by the layout editing unit 120.

Note that the storage unit 130 is realized by various types of computer memory, an auxiliary storage apparatus, and so on.

[1.4. Evaluation Calculation Unit]

The evaluation calculation unit 140 performs an evaluation calculation process, including calculation of a layout design data state value or a repeated optimization calculation, using a preset algorithm, and causes the interface unit to display the obtained calculation result on a screen. The evaluation calculation unit 140 comprises a comparison unit 141 and an animation unit 142.

Here, the comparison unit 141 reads past layout design data stored in the storage unit 130 as past record data, performs an evaluation calculation on a plurality of layout design data including the past record data, and causes the interface unit 110 to display the calculation result on a screen in a comparative format such as a graph format. The animation unit 142 causes the interface unit 110 to perform continuous screen display of a layout diagram of log data relating to the layout design data output by the layout editing unit 120.

Specifically, the evaluation calculation unit 140 is realized by the main memory of the computer, a specialized evaluation calculation program stored therein, the CPU controlled by the program, and so on. Further, the program for realizing the evaluation calculation unit 140 may be an independent program or a part of the program for realizing the layout editing unit 120.

[1.5. CAD Conversion Unit]

The CAD conversion unit 150 uses data relating to a two-dimensional CAD equipment drawing symbol and data relating to a three-dimensional CAD equipment model to convert the layout design data into a two-dimensional CAD drawing or a three-dimensional CAD model, and causes the interface unit 110 to display the result on a screen. In this embodiment, the CAD conversion unit 150 obtains the required CAD data from a two-dimensional CAD equipment drawing symbol database 160 and a three-dimensional CAD equipment model database 170, which are provided in advance on the outside of the layout design support system 100. Alternatively, CAD data may be prepared in advance within the layout design support system 100.

Specifically, the CAD conversion unit 150 is realized by the main memory of the computer, a specialized CAD conversion program stored in the main memory, the CPU controlled by the program, and so on. Further, the program for realizing the CAD conversion unit 150 may be an independent program or a part of the program for realizing the layout editing unit 120.

[2. Specific Process of Layout Editing Unit]

The layout editing unit 120 according to this embodiment is characterized by that a layout design process is performed with recognizing in terms of three-dimension the position relation inside a building. The building data editing unit 121, equipment arrangement data editing unit 122, and equipment connection element data editing unit 123, which each are notable for having such characteristics, are explained below.

[2.1. Outline Flow of Layout Editing Process]

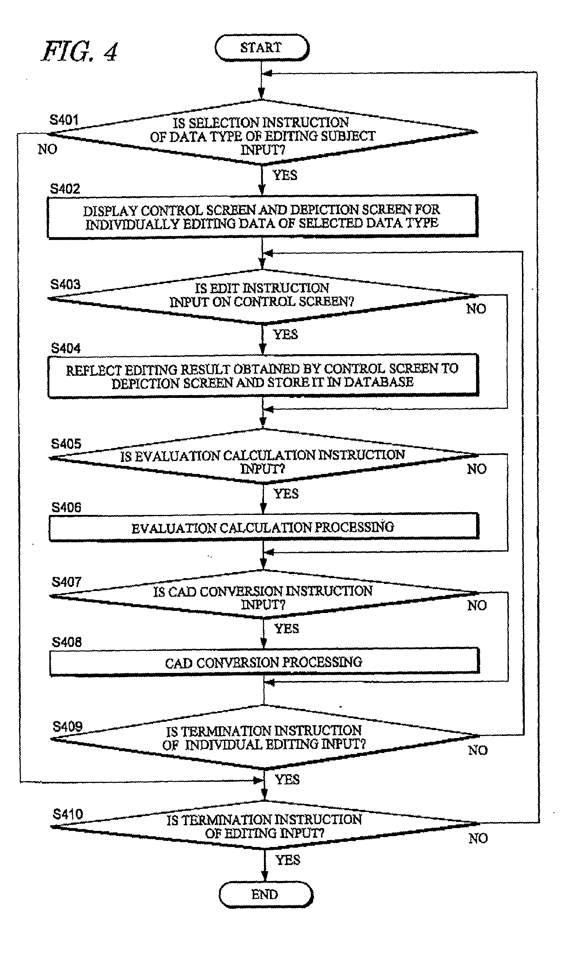

First, an outline of a layout editing process performed by the layout editing unit 120 is explained, referring to Fig. 4. Here, Fig. 4 is a flowchart showing an outline of layout editing process performed by the layout design support system 100 according to this embodiment. Note that operations of the interface unit 110, operation image elements displayed on the screen, and operations performed by a designer in relation thereto constitute typical interactive input/output process through the interface unit 110. Therefore, description relating to this typical interactive input/output process will hereafter be omitted where appropriate, and description will focus on the characteristic process serving as the main operations of the layout editing unit 120, evaluation calculation unit 140, CAD conversion unit 150, and so on.

As shown in Fig. 4, in layout editing process, the five data types constituting the individual editing subjects are displayed on an editing screen by the layout editing unit 120, and when a selection instruction relating to a specific data type is input by a user and accepted by the layout editing unit 120 (YES in S401), the layout editing unit 120 causes the interface unit 110 to display the individual editing screen of this data type relating to the layout design of a target plant. In other words, the editing screen and depiction screen for individually editing data of the selected data type are displayed by the individual editing unit 121 to 125 of the selected data type through the interface unit 110 (S402).

When an edit instruction is input on the displayed editing screen by the user and accepted by the layout editing unit 120 (YES in S403), the individual editing unit 121 to 125 of the selected data type edits the layout design data in accordance with the edit instruction, transmits the obtained editing result to the depiction screen, where the result is reflected in the layout diagram, and stores the result in the database 131 to 135 of the selected data type (S404).

When an evaluation calculation instruction is input during layout editing (YES in S405), the evaluation calculation unit 140 is activated by the evaluation calculation activating unit 126 of the layout editing unit 120, and evaluation calculation process is performed by the evaluation calculation unit 140 (S406). In other words, the evaluation calculation unit 140 displays the control screen for evaluation calculation process, and in accordance with an instruction input onto the control screen, performs evaluation calculation process, including calculation of a layout design data state value or a repeated optimization calculation, using a preset algorithm. The obtained calculation result is then displayed on a screen.

Specifically, when a comparison instruction is input on the evaluation calculation process control screen, for example, the evaluation calculation unit 140 uses the comparison unit 141 to read past layout design data stored in the storage unit 130 as past record data using the comparison unit 141, perform an evaluation calculation on a plurality of layout design data including the past record data, and display the calculation result on a screen in a comparative format such as a graph format. When a progress instruction is input, the animation unit 142 performs continuous screen display of a layout diagram of log data relating to the layout design data output by the layout editing unit 120.

When a CAD conversion instruction is input during layout editing (YES in S407), the output format switching unit 127 of the layout editing unit 120 controls the CAD conversion unit 150 to perform CAD conversion process. In other words, the depiction screen output format is switched to a two-dimensional CAD drawing or a three-dimensional CAD model by the CAD conversion unit 150 (S408).

Although not shown in Fig. 4, when a display range modification instruction or a screen switching instruction is input during layout editing, display modification or screen switching is performed by the display range modification unit 128 or the screen switching unit 129 of the layout editing unit 120.

The layout editing unit 120 continues individual editing process of the selected data type (S403 to S408) until an instruction to terminate individual editing process of the selected data type is input (NO in S409). When an individual editing process termination instruction is input (YES in S409) and a selection instruction relating to the next data type is input, individual editing process relating to the new data type is performed.

Finally, when an editing termination instruction is input (YES in S410) following an individual editing process termination instruction (YES in S409), the layout editing unit 120 terminates the series of layout editing process.

[2.2. Details of Layout Editing Process]

The layout editing process described above, which is performed by the layout design support system according to this embodiment, will now be described in further detail.

[2.2.1. Building Data Editing Process]

(1) Configuration of editing control unit

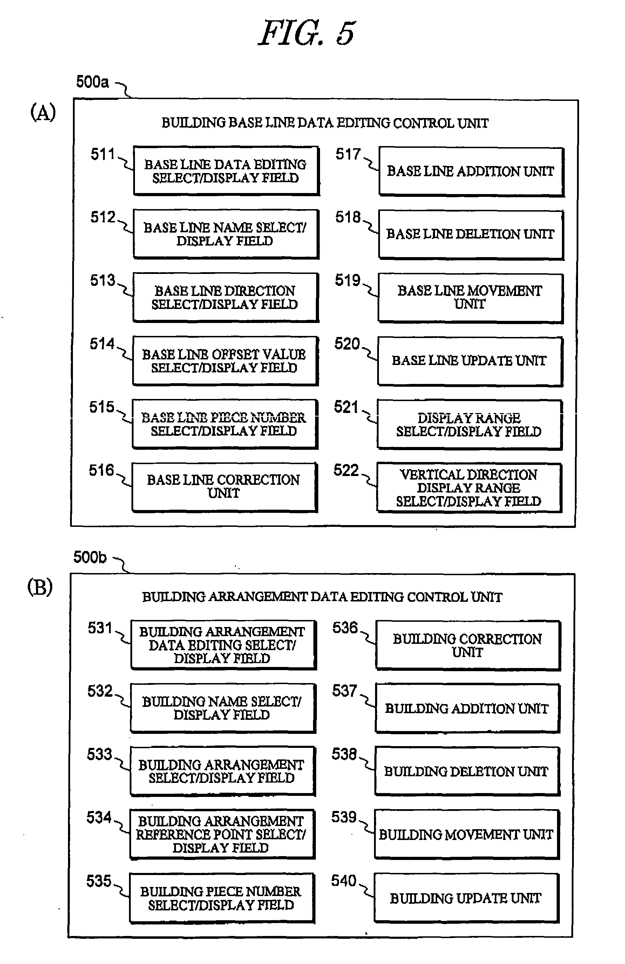

Figs. 5A and 5B are views showing a functional configuration example of editing control units for building data in the building data editing unit 121, Fig. 5A showing a building base line data editing control unit 500a, and Fig. 5B showing an building arrangement data editing control unit 500b. The editing control units 500a and 500b each cause the interface unit 110 to display an editing screen for the building data, perform various display processes for supporting various operations on the displayed editing screen, and accept various inputs from a user to edit the building data.

As shown in Fig. 5A, the building base line data editing control unit 500a, so as to perform various display processes for supporting operations on a displayed editing screen for the building base line data, and accept various inputs to edit the building base line data, comprises a base line data editing select/display field 511 which displays an indication of a function for editing building base line data relating to the base line of the building, and allows the user to select the function as a switching destination function. The building base line data editing control unit 500a also comprises a base line name select/display field 512 which displays a base line name and allows the user to select the name or change into another name, a base line direction select/display field 513 for displaying and correcting the direction of a base line specified on the base line name select/display field 512, and a base line offset value select/display field 514 for displaying and correcting an offset position from the origin of the base line specified on the base line name select/display field 512.

Here, in this embodiment, the building base line data editing control unit 500a also comprises a base line piece number select/display field 515 which displays the piece number of a base line specified by the base line data editing select/display field 511 and changes the piece number into another number selected by the user. In other words, when the base line piece number select/display field 515 displays a piece number, and accepts an input from the user, the base line piece number select/display field 515 set the piece number or change it into another number.

Note that the piece numbers used for the building arrangement data and the building base line data, are the numbers given to the individual pieces which are defined within a building range or entire layout range where appropriate. Regarding the building arrangement data, for example, it may be taken into account that a plurality of buildings each, which are provided within the entire layout range, are defined as building pieces, and that a piece number is set for each of the building pieces. It also may be taken into account that a single building is divided into a plurality of building pieces, and that a piece number is set for each of the building pieces which configures the single building. On the other hand, regarding the building base line data, it may be taken into account that a plurality of base lines each, which are disposed within a building range or the entire layout range, are defined as base line pieces, and that a piece number is set for each of the base line pieces. It also may be taken into account that the piece number of a building piece is set as a piece number for a base line which is included in the building piece. In any case of these, an building data editing process can be performed efficiently using such piece numbers.

The building base line data editing control unit 500a further comprises, as units for correcting, adding, deleting, or moving a base line specified on the base line name select/display field 512 on the depiction screen, a base line correction unit 516, a base line addition unit 517, a base line deletion unit 518, and a base line movement unit 519, which display a correction button, a addition button, and a deletion button, and a movement button, respectively on the editing screen, and accept an input to perform various operations. Here, the base line correction unit 516, when having accepted an correction input from the correction button, corrects the specified base line in accordance with the content set on the base line direction select/display field 513 and the base line offset value select/display field 514.

The building base line data editing control unit 500a further comprises a base line update unit 520 which displays a update button on the editing screen, accepts an input to obtain data relating to the position and dimensions of the base line edited by the editing control unit 500a, and reflects these data in the building database 131 as a building base line data editing result.

The building base line data editing control unit 500a further comprises a display range select/display field 521 which selects the entire layout range (entire site area) or the building range as the display range, and changes the display angle of the display range. In this embodiment, the editing control unit 500a further comprises a vertical direction display range select/display field 522, allows the user to select as restriction values in Z direction the peak value and bottom value, and sets the display range in the vertical direction in accordance with input Z-direction range. Note that the display range select/display field 521 and vertical direction display range select/display field 522 are provided in common with the building arrangement data editing control unit 500b described below.

As shown in Fig. 5B, the building arrangement data editing control unit 500b, so as to perform various display processes for supporting operations on a displayed editing screen for the building arrangement data, and accept various inputs to edit the building arrangement data, comprises a building arrangement data editing select/display field 531 which displays an indication of a function for editing building arrangement data relating to the arrangement of the building, and allows the user to select the function as a switching destination function.

The building arrangement data editing control unit 500b also comprises a building name select/display field 532 which displays a building name and allows the user to select the name or change into another name, a building arrangement select/display field 533 for displaying and correcting building arrangement information specified on the building name select/display field 532, and a building arrangement reference point select/display field 534 for showing whether a reference point of the building arrangement information displayed by the building arrangement select/display field 533 is at a minimum value or a maximum value of the arrangement, and correcting the reference point.

The building arrangement data editing control unit 500b further comprises, as units for correcting, adding, deleting, or moving a building specified on the building name select/display field 532 on the depiction screen, a building correction unit 536, a building addition unit 537, and a building deletion unit 538, and a building movement unit 539, which display a correction button, a addition button, and a deletion button, and a movement button, respectively on the editing screen, and accept an input to perform various operations. Here, the building correction unit 536, when having accepted an correction input from the correction button, corrects the specified building in accordance with the content set on the building arrangement select/display field 533 and the building arrangement reference point select/display field 534.

The building arrangement data editing control unit 500b further comprises a building arrangement data update unit 540 which displays a update button on the editing screen, accepts an input to obtain data relating to the position and dimensions of the building edited by the editing control unit 500b and reflects these data in the building database 131 as a building arrangement data editing result.

(2) Configuration of depiction control unit

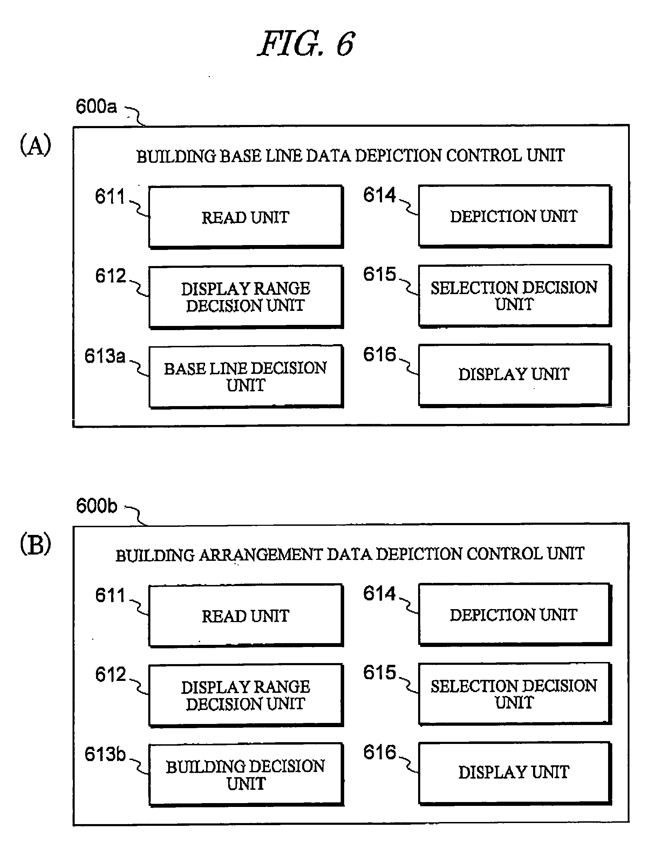

Next, the configuration of depiction control units for depicting the base line data and building arrangement data edited by the editing control units 500a and 500b, is explained below, referring to Fig. 6. Here, Figs. 6A and 6B are views showing a functional configuration example of depiction control units for building data in the building data editing unit 121, Fig. 6A showing a building base line data depiction control unit 600a, and Fig. 6B showing an building arrangement data depiction control unit 600b. The depiction control units 600a and 600b each cause the interface unit 110 to display a depiction screen for the building data, perform various processes for depicting the building data on the displayed depiction screen.

As shown in Fig. 6A, the building base line data depiction control unit 600a comprises a read unit 611 for reading an offset value and direction or the like of a base line for depiction use from the building database 131 of the storage unit 130. The building base line data depiction control unit 600a also comprises a display range decision unit 612 for deciding whether a building is set for the display range or not through the display range select/display field 521 of the editing control unit 500a.

The depiction control unit 600a also comprises a base line decision unit 613a for deciding whether or not a base line read from the building database 131 through the read unit 611 is disposed within a building if the display range decision unit 612 has decided that the building is set for the display range.

The depiction control unit 600a also comprises a depiction unit 614 for depicting on a depiction screen the base line layout design data generated by various processes of the editing control unit 500a. The depiction unit 614 depicts the base line layout design data on the depiction screen within the vertical display range (within defined by the peak and bottom values in Z direction) set by the vertical direction display range select/display field 522.

Further, the depiction control unit 600a comprises a selection decision unit 615 for deciding whether or not the layout-designed base line data corresponds to the base line specified by the base line data editing select/display field 511, and a display unit 616 for causing the interface unit 110 to actually display the base line on a depiction screen. When the selection decision unit 615 has decided that the base line data corresponds to the specified base line, the display unit 616 changes the display mode of the base line (for example, visually emphasized display by changing the color scheme).

The base line data depiction control unit 600a has the configuration as described above, and the building arrangement data depiction control unit 600b has the same configuration as that of the depiction control unit 600a, except for the depicted data, which is not the base line data but the building data. Therefore, with regard to the configuration of the building arrangement data depiction control unit 600b, further explanation is omitted (See Fig. 6B).

(3) Layout design flow of base line data

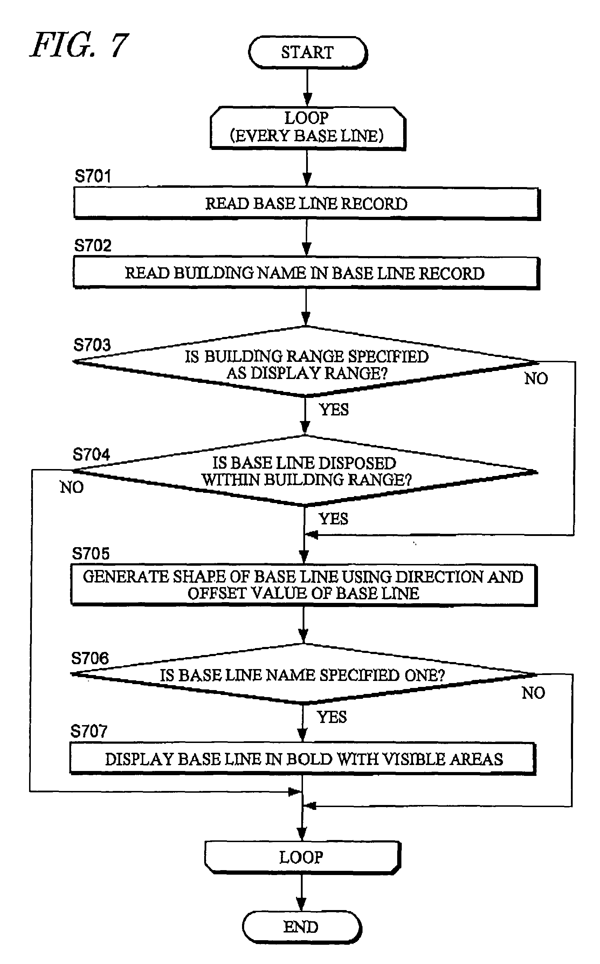

Next, referring to Fig. 7, a flow of display process when the base line data included in the building data, which is stored in the building database 131, is read and a base line layout is displayed on a depiction screen by the base line data depiction control unit 600a, is explained below. As shown in Fig. 7, base line display is performed in the following manner as a loop process (LOOP) executed in units of the base line records stored in the building database 131.

First, a record relating to each base line is read from the building database 131 of the storage unit 130 in record sequence by the read unit 611 of the depiction control unit 600a (S701), and then the building name registered in the base line record is read (S702). Whether the building range is specified as the display range is decided by the display range decision unit 612 (S703). When the building range is specified (YES in S703), whether the read base line is disposed within the specified building range is decided by the base line decision unit 613a (S704).

Only if the base line is disposed within the specified building range (YES in S704), the shape of the base line including a straight base line and label or the like is generated (S705) using the direction and offset value or the like of the read base line by the depiction unit 614. Here, when the base line is disposed in the vertical direction, the shape of the base line is generated within the range defined by the peak and bottom values in the vertical direction. When the display range decision unit 612 has decided that the building range is not specified as the display range (NO in S703), the shape of the base line is generated as is by the depiction unit 614 (S705).

When the selection decision unit 615 has decided that the name of the base line corresponds to the base line name specified on the base line name select/display field 512 (YES in S706), the base line is displayed in a visually-emphasized manner, for example, on the depiction screen as described later, by the display unit 616 (S707).

When the loop process described above has been repeated for the records of all of the buildings registered in the building database and all of the buildings have been displayed, the process ends. Note that when an operation is performed for adding, correcting, deleting, or moving a base line on the editing screen during base line data editing process by the editing control unit 500a, the building database 131 is updated in relation to the corresponding base line, and then the loop process described above is executed on the record of the corresponding base line alone.

(4) Layout design flow of building data

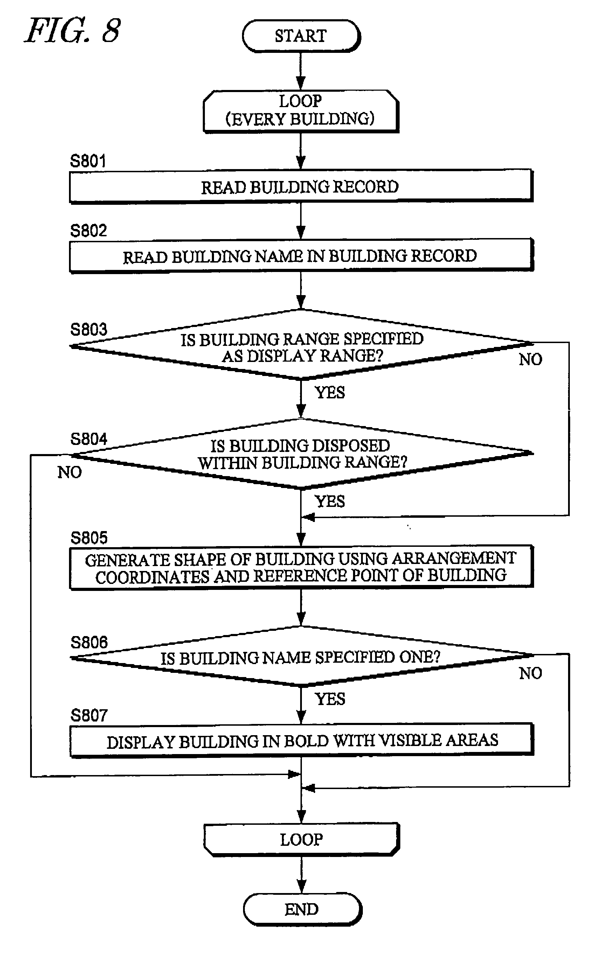

Next, referring to Fig. 8, a flow of display process when the building data, which are stored in the building database 131, is read and a building layout is displayed on a depiction screen by the building data depiction control unit 600b, is explained below. As shown in Fig. 8, building display is performed in the following manner as a loop process (LOOP) executed in units of the building records stored in the building database 131.

First, a record relating to each building is read from the building database 131 in record sequence by the read unit 611 of the depiction control unit 600b (S801), and then the building name registered in the building record is read (S802) Whether the building range is specified as the display range is decided by the display range decision unit 612 (S803). When the building range is specified (YES in S803), whether the read building is disposed within the specified building range is decided by the building decision unit 613b (SB04).

Only if the building is disposed within the specified building range (YES in S804), the shape of the building is generated (S805) using the arrangement coordinates and reference point or the like by the depiction unit 614. Here, the shape of the building is generated within the range defined by the peak and bottom values in the vertical direction. When the display range decision unit 612 has decided that the building range is not specified as the display range (NO in S803), the shape of the building is generated as is by the depiction unit 614 (S805).

When the selection decision unit 615 has decided that the name of the building corresponds to the building name specified by the building name select/display field 532 (YES in S806), the building is displayed in a visually-emphasized manner, for example, on the depiction screen as described later, by the display unit 616 (S807).

When the loop process described above has been repeated for the records of all of the buildings registered in the building database and all of the buildings have been displayed, the process ends. Note that when an operation is performed for adding, correcting, deleting, or moving a building on the editing screen during building data editing process by the editing control unit 500b, the building database 131 is updated in relation to the corresponding building, and then the loop process described above is executed on the record of the corresponding building alone.

(5) Editing screen example

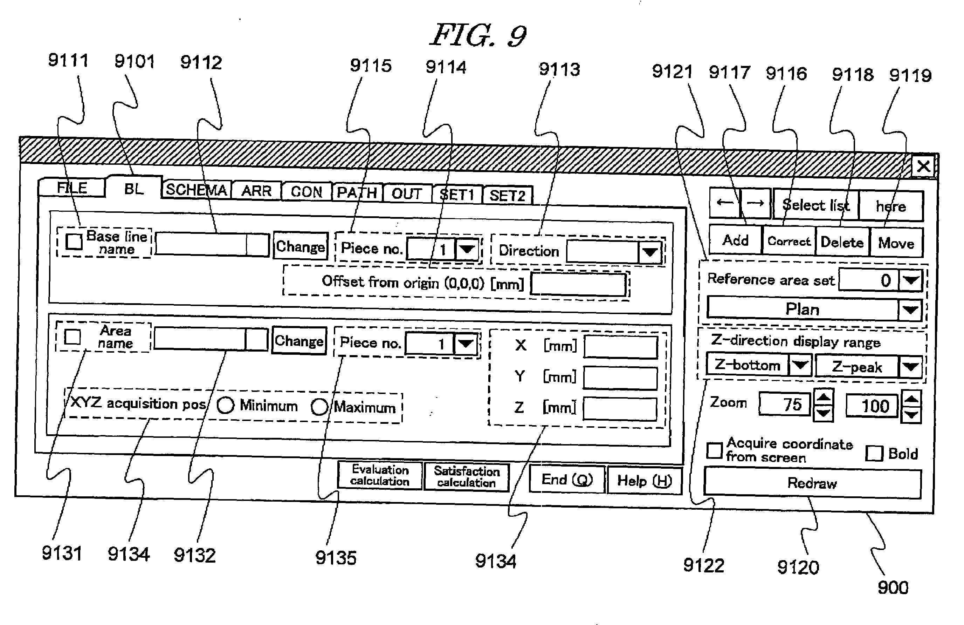

Next, an editing screen example for building data is explained below, referring to Fig. 9. Here, Fig. 9 shows specific screen display example of an editing screen for base line data and building data.

This editing screen 900 corresponds to various functions of the building base line data editing control unit 500a and the building arrangement data editing control unit 500b shown in Fig. 5, and is used to switch between a plurality of other editing screens to be described below through the use of tabs 9101 displayed in the upper end portion. In other words, the tabs 9101 serve as means for realizing the functions of the screen switching unit 129.

A base line data editing select/display field 9111, a base line name select/display field 9112, a base line direction select/display field 9113, a base line offset value select/display field 9114, a base line piece number select/display field 9115, and so on are disposed in the upper portion of the left-of-center part of the editing screen 900. These select/display fields 9111 to 9115 serve as a building base line data editing part, and correspond respectively to the select/display fields 511 to 515 shown in Fig. 5A, with which they share the final two digits of their respective reference numerals.

A building arrangement data editing select/display field 9131, a building name select/display field 9132, a building arrangement select/display field 9133, a building arrangement reference point select/display field 9134, a building piece number select/display field 9135,and so on are disposed in the lower portion of the left-of-center part of the editing screen 900. These select/display fields 9131 to 9135 serve as a building arrangement data editing part, and correspond respectively to the select/display fields 531 to 535 shown in Fig. 5B, with which they share the final two digits of their respective reference numerals.

A correction button 9116, an addition button 9117, a deletion button 9118, a movement button 9119, a redraw/data update button 9120, and so on are disposed on the right side part of the editing screen 900. These buttons 9116 to 9120 corresponds respectively to the units 516 to 520 for editing base line data and the units 536 to 540 for editing building arrangement data shown in Figs. 5A and 5B.

(6) Specific editing process of building data

With using the editing screen 900 shown in Fig. 9, the building data can be edited in the following manner.

First, by entering a tick in either the base line data editing select/display field 9111 or the building arrangement data editing select/display field 9131 on the editing screen 900, an editing mode display is switched between a building base line data editing mode and a building arrangement data editing mode.

When a tick is entered in the base line data editing select/display field 9111, the base line name select/display field 9112 reads the building base line data from the building database 131 and displays the base line names on a pull-down menu. When a base line name is selected from the pull-down menu, the base line piece number select/display field 9115 displays the piece number of the building base line data, and the base line direction select/display field 9113 and base line offset value select/display field 9114 display the base line direction and base line offset value, respectively. This information can then be modified. When a change button is depressed on the base line name select/display field 9112 while a base line name is displayed, the base line name can be modified.

The modification content of the base line name select/display field 9112, base line direction select/display field 9113, and base line offset value select/display field 9114, and base line piece number select/display field 9115 is confirmed as modified data by pressing the correction button 9116. By pressing the addition button 9117, deletion button 9118, or movement button 9119, data relating to a new base line can be added, data relating to an unnecessary base line can be deleted, and a base line can be moved on a depiction screen. Further, by pressing the redraw/data update button 9120, the base lines on the depiction screen can be redrawn in accordance with the building base line data edited on the editing screen 900, and the building database 131 can be updated.

When a tick is entered in the building arrangement data editing select/display field 9131, the building name select/display field 9132 reads the building arrangement data from the building database 131 and displays the building names on a pull-down menu. When a building name is selected from the pull-down menu, the building piece number select/display field 9135 displays the piece number corresponding to the selected building data.

Further, a selection input is accepted by the building arrangement reference point select/display field 9134 as to whether to edit the building arrangement using either the minimum coordinate point or the maximum coordinate point. The XYZ coordinates relating to the selected coordinate point are then displayed by the building arrangement select/display field 9133. This information can then be modified. When a change button is depressed on the building name select/display field 9132 while a building name is displayed, the building name can be changed.

The modification content of the building name select/display field 9132, building arrangement select/display field 9133, building arrangement reference point select/display field 9134, and building piece number select/display field 9135 is confirmed as modified data by pressing the correction button 9116. By pressing the addition button 9117, deletion button 9118, or movement button 9119, data relating to a new building can be added, data relating to an unnecessary building can be deleted, and a building can be moved on a depiction screen. Further, by pressing the redraw/data update button 9120, the buildings on the depiction screen can be redrawn in accordance with the building arrangement data edited on the editing screen 900, and the building database 131 can be updated.

[2.2.2. Equipment Arrangement Data Editing Process]

(1) Configuration of editing control unit

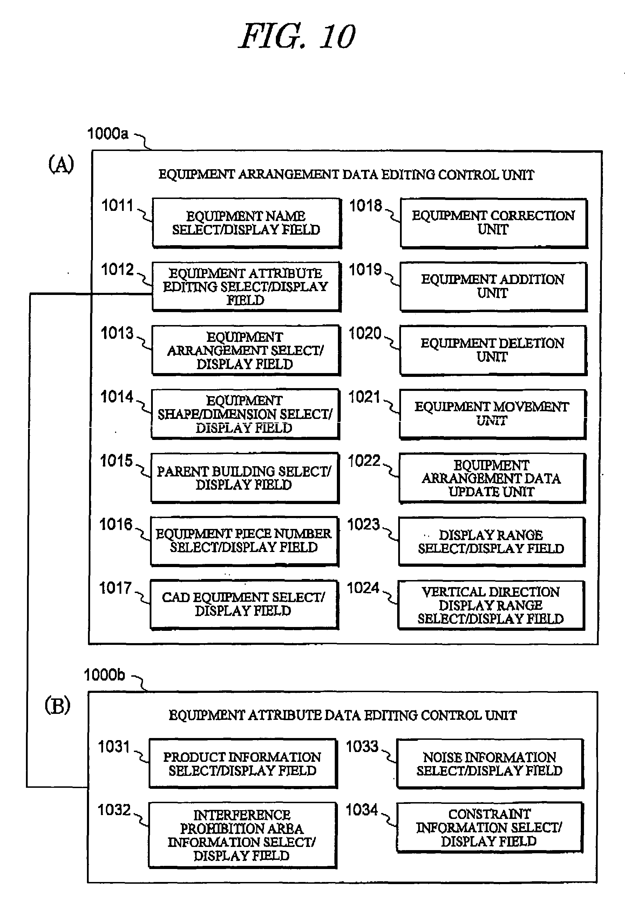

Figs. 10A and 10B are views showing a functional configuration example of editing control units for equipment arrangement data in the equipment arrangement data editing unit 122, Fig. 10A showing an equipment arrangement data editing control unit 1000a, and Fig. 10B showing an equipment attribute data editing control unit 1000b. The editing control units 1000a and 1000b each cause the interface unit 110 to display an editing screen for the equipment arrangement data, perform various display processes for supporting various operations on the displayed editing screen, and accept various inputs from a user to edit the equipment arrangement data.

As shown in Fig. 10A, the equipment arrangement data editing control unit 1000a, so as to perform various display processes for supporting operations on a displayed editing screen for the equipment arrangement data, and accept various inputs to edit the equipment arrangement data, comprises an equipment name select/display field 1011 which displays an equipment name and allows the user to select the name or change into another name, and an equipment attribute editing select/display field 1012 which displays an indication of a function for editing equipment attribute data relating to the attributes of the equipment specified on the equipment name select/display field 1011, allows the user to select the function, and displays an editing screen for the equipment attribute data when the function is selected.

The equipment arrangement data editing control unit 1000a further comprises an equipment arrangement select/display field 1013 for displaying and correcting the arrangement position and arrangement angle of the equipment specified on the equipment name select/display field 1011, an equipment shape/dimension select/display field 1014 for displaying and correcting the shape and dimensions of the equipment specified on the equipment name select/display field 1011, and a parent building select/display field 1015 for registering the name of the building to which the equipment specified on the equipment name select/display field 1011 belongs when the equipment belongs to a building.

Here, in this embodiment, the equipment arrangement data editing control unit 1000a also comprises an equipment piece number select/display field 1016 which displays the piece number of an equipment specified by the equipment name select/display field 1011 and changes the piece number into another number selected by the user. In other words, when the equipment piece number select/display field 1016 displays a piece number as a part of equipment specification information including equipment name or the like, and accepts an input from the user, the equipment piece number select/display field 1016 set the piece number or change it into another number. In addition, when a display switching instruction is input from the user, the equipment piece number select/display field 1016 performs display switching into the piece number of another piece configuring the equipment.

The equipment arrangement data editing control unit 1000a further comprises a CAD equipment select/display field 1017 for selecting the two-dimensional CAD equipment drawing symbol or three-dimensional equipment model associated with the equipment specified on the equipment name select/display field 1011, and displaying the symbol name or model name thereof. The CAD equipment select/display field 1017 serves as means for realizing the functions of the output format switching unit 127 on the editing screen, and by controlling the CAD conversion unit 150, a two-dimensional CAD equipment drawing symbol or a three-dimensional equipment model is displayed on the depiction screen.

The equipment arrangement data editing control unit 1000a further comprises as units for correcting, adding, deleting, or moving an equipment specified on the equipment name select/display field 1011 on the depiction screen, an equipment correction unit 1018, an equipment addition unit 1019, an equipment deletion unit 1020, and an equipment movement unit 1021, which display a correction button, a addition button, and a deletion button, and a movement button, respectively on the editing screen, and accept an input to perform various operations.

Here, the equipment correction unit 1018, when having accepted a correction input from the correction button, corrects the specified equipment in accordance with the content set on the equipment attribute data editing control unit 1000b, the equipment arrangement select/display field 1013, the equipment shape/dimension select/display field 1014, and the parent building select/display field 1015. Note that the equipment movement unit 1021, when having accepted an input from the movement button, moves the specified equipment on the depiction screen. When the equipment is configured by a plurality of pieces, each piece can be moved separately, or all pieces of the equipment can be moved in a lump.

Further, the equipment movement unit 1021 can move in a lump a group of equipments associated with a parent building specified by the parent building select/display field 1015. In other words, when a plurality of equipments are disposed in a single building which has a plurality of floors, and when the layout design requires the movement and rotation for each building, the equipment movement unit 1021 moves or rotates in a lump the equipment group associated with the building.

In addition, when an equipment connection element as described later is established, and thereby an equipment '1" of a building "A" is connected with an equipment "2" of another building "B", the equipment group of the building "A" can be moved while maintaining the connection relation. Note that such equipment group can be established not only by equipments disposed in a single building, but also by equipments having some relation with each other, so that, when a function of group selection is provided to the equipment attribute editing select/display field 1012, the equipments of a registered group can be moved or rotated in a lump. Such group is configured in accordance with, for example, system relation, design field relation, supplier relation, delivery date, and so on.

The equipment arrangement data editing control unit 1000a further comprises an equipment arrangement data update unit 1022 which displays a update button on the editing screen, accepts an input to obtain data relating to the position and dimensions of the equipment edited by the editing control unit 1000a and reflects these data in the equipment arrangement database 132 as an equipment arrangement data editing result.

The equipment arrangement data editing control unit 1000a further comprises a display range select/display field 1023 which selects the entire layout range (entire site area) or the building range as the display range, and changes the display angle of the display range. In this embodiment, the editing control unit 1000a further comprises a vertical direction display range select/display field 1024, allows the user to select as restriction values in Z direction the peak value and bottom value, and sets the display range in the vertical direction in accordance with input Z-direction range.

As shown in Fig. 10B, the equipment attribute data editing control unit 1000b, so as to perform various display processes for supporting operations on a displayed editing screen for the equipment attribute data, and accept various inputs to edit the equipment attribute data, comprises a product information select/display field 1031 for displaying and correcting product information relating to the equipment specified on the equipment name select/display field 1011 such as the amount, delivery date, manufacturer, and cost.

The equipment attribute data editing control unit 1000b further comprises an interference prohibition area information select/display field 1032 for displaying and correcting dimension information relating to the interference prohibition area, which is set with taking account of room space or restriction space according to rules for an equipment, regarding the equipment specified on the equipment name select/display field 1011, and a noise information select/display field 1033 for displaying and correcting dimension information relating to the area (referred to as "noise area" where appropriate below) affected by the noise of the equipment specified on the equipment name select/display field 1011, or information relating to the sound pressure level of the noise.

The equipment attribute data editing control unit 1000b further comprises a constraint information select/display field 1034 for displaying and correcting constraint information required for optimization calculation of the equipment specified on the equipment name select/display field 1011.

Note that, when the equipment arrangement data update unit 1022 of the editing control unit 1000a accepts an input through the update button displayed on the editing screen by the interface unit 110, the results of the equipment arrangement data editing process performed by the editing control units 1000a and 1000b shown in Fig. 10 are stored in the equipment arrangement database 132 as updated equipment arrangement data.

(2) Configuration of depiction control unit

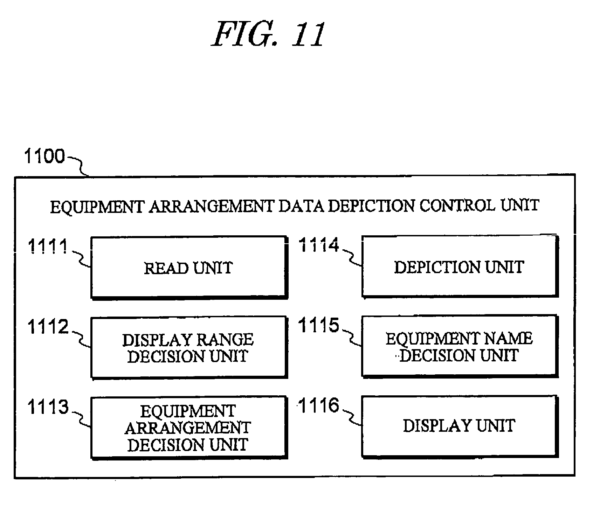

Next, the configuration of a depiction control unit for depicting the equipment arrangement data edited by the editing control units 1000a and 1000b, is explained below, referring to Fig. 11. Here, Fig. 11 is a view showing a functional configuration example of depiction control unit 1100 for equipment arrangement data in the equipment arrangement data editing unit 122. The equipment arrangement data depiction control unit 1100 causes the interface unit 110 to display a depiction screen for the equipment arrangement data, performs various processes for depicting the equipment arrangement data on the displayed depiction screen.

As shown in Fig. 11, the equipment arrangement data depiction control unit 1100 comprises a read unit 1111 for reading a specification, arrangement coordinates, size, and so on regarding equipment arrangement for depiction use from the equipment arrangement database 132 of the storage unit 130. The equipment arrangement data depiction control unit 1100 also comprises a display range decision unit 1112 for deciding whether a building is set for the display range or not through the display range select/display field 1023 of the editing control unit 1000a.

The depiction control unit 1100 also comprises an equipment arrangement decision unit 1113 for deciding whether or not an equipment read from the equipment arrangement database 132 through the read unit 1111 is disposed within a building if the display range decision unit 1112 has decided that the building is set for the display range.

The depiction control unit 1100 also comprises a depiction unit 1114 for depicting on a depiction screen the equipment arrangement layout design data generated by various processes of the editing control units 1000a and 1000b. The depiction unit 1114 depicts the equipment arrangement layout design data on the depiction screen within the vertical display range (within defined by the peak and bottom values in Z direction) set by the vertical direction display range select/display field 1024.

Further, the depiction control unit 1100 comprises a equipment name decision unit 1115 for deciding whether or not the equipment name of an equipment depicted by the depiction unit 1114 corresponds to the equipment name specified by the equipment name select/display field 1011, and a display unit 1116 for causing the interface unit 110 to actually display the equipment on a depiction screen. When the equipment name decision unit 1115 has decided that the equipment name corresponds to the specified equipment name, the display unit 1116 changes the display mode of the equipment (for example, visually emphasized display by changing the color scheme).

(3) Layout design flow of equipment arrangement data

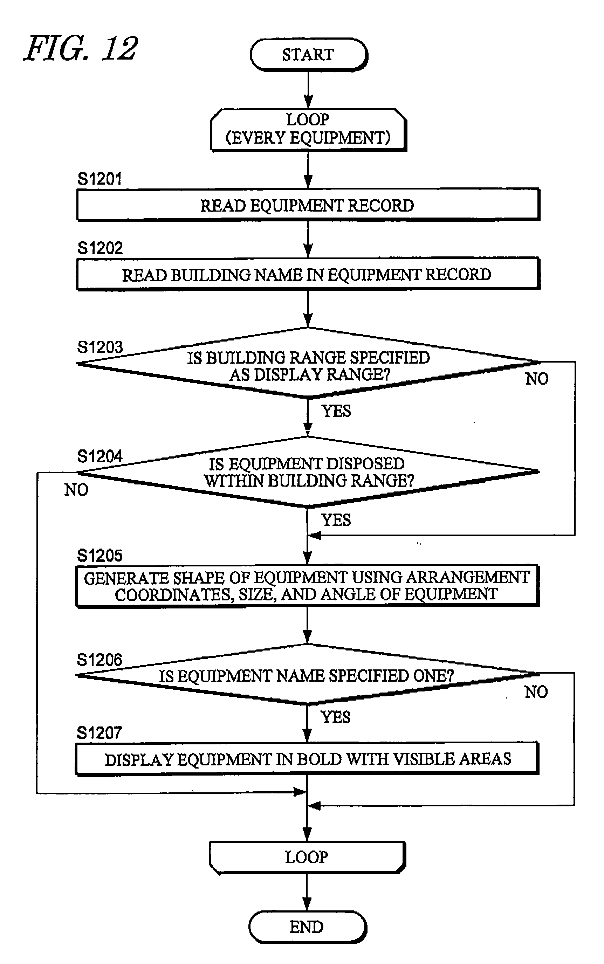

Next, referring to Fig. 12, a flow of display process when the equipment arrangement data, which is stored in the equipment arrangement database 132, is read and an equipment is displayed on the depiction screen by the equipment arrangement data depiction control unit 1100. As shown in Fig. 12, equipment display is performed in the following manner as a loop process (LOOP) executed in units of the equipment records stored in the equipment arrangement database 132.

First, a record relating to each equipment is read from the equipment arrangement database 132 of the storage unit 130 in record sequence by the read unit 1111 (S1201), and then the building name registered in the equipment record is read (S1202). Whether the building range is specified as the display range is decided by the display range decision unit 1112 (S1203). When the building range is specified (YES in S1203), whether the read equipment is disposed within the specified building range is decided by the equipment arrangement decision unit 1113 (S1204).

Only if the equipment is disposed within the specified building range (YES in S1204), the shape of the equipment is generated by the depiction unit 1114 (S1205) using the arrangement coordinates, size (length, width, height), and arrangement angle of the equipment.

For example, as shown in Fig. 3, which is a conceptual view, the arrangement coordinates (white-filled circle in Fig. 3) and size are read from the equipment arrangement database 132, according to the arrangement coordinates, the length direction and width direction on a horizontal plane and height direction are decided using the arrangement coordinates as a reference point, so that a rectangular parallelepiped shape of the equipment is generated which has front and back surfaces at both ends in the length direction, right and left surfaces in the width direction, and top and bottom surfaces in the vertical direction. In addition, when a rotation angle is stored as angle of the equipment, the longitudinal axis of an equipment is rotated about the vertical axis passing through the arrangement coordinate point of the equipment.

When the display range decision unit 1112 has decided that the building range is not specified as the display range (NO in S1203), the shape of the equipment is generated as is by the depiction unit 1114 (S1205).

When the equipment name decision unit 1115 has decided that the equipment name of the equipment corresponds to the equipment name specified by the equipment name select/display field 1011 (YES in S1206), the equipment is displayed in a visually-emphasized manner, for example, on a depiction screen by the display unit 1116. Here, when an interference prohibition area range or noise range area range is set which are required for study of the equipment, through the interference prohibition area information select/display field 1032 or noise information select/display field 1033, the area range also is displayed as a visible area together with the equipment by the display unit 1116.

When the loop process described above has been repeated for the records of all of the equipments registered in the equipment arrangement data and all of the equipments have been displayed, the process ends. Note that when an operation is performed for adding, correcting, deleting, or moving an equipment on the editing screen during equipment arrangement data editing process by the editing control unit 1000a, the equipment arrangement database 132 is updated in relation to the corresponding equipment, and then the loop process described above is executed on the record of the corresponding equipment alone.

(4) Editing screen example

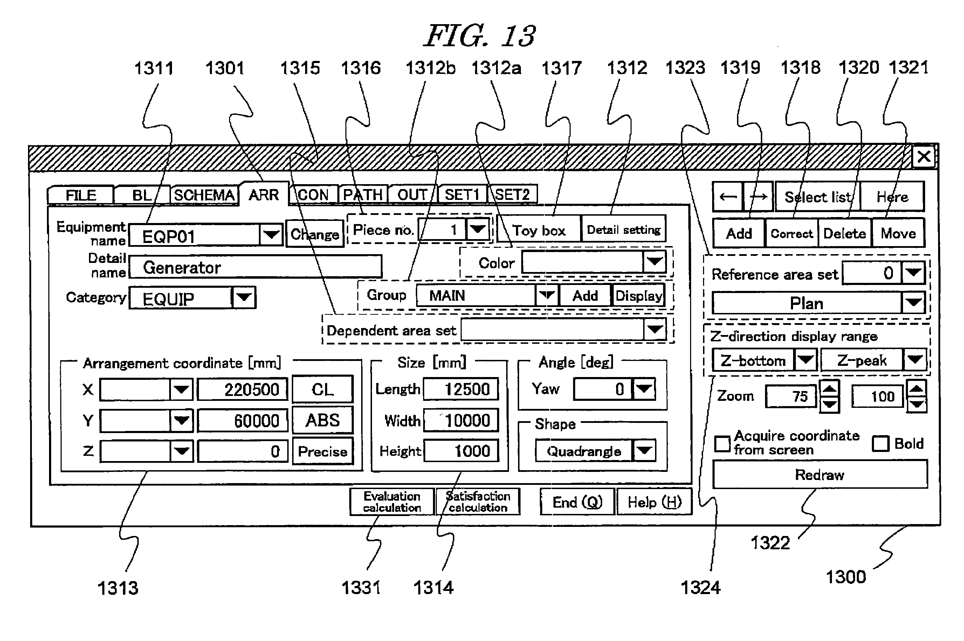

Next, an editing screen example for equipment arrangement data is explained below, referring to Fig. 13. Here, Fig. 13 shows a specific screen display example of an editing screen 1300 for equipment arrangement data. This editing screen 1300 corresponds to the equipment arrangement data editing control unit 1000a shown in Fig. 10A, and is used to switch between the aforementioned building data editing screen 900 and a plurality of other editing screens to be described below through the use of tabs 1301 displayed in the upper end portion.

As shown in Fig. 13, an equipment name select/display field 1311, an equipment attribute editing select/display field 1312 (detail setting), an equipment arrangement select/display field 1313, an equipment shape/dimension select/display field 1314, a parent building select/display field 1315, an equipment piece number select/display field 1316, a CAD equipment select/display field 1317, and so on are disposed in the left-of-center part of the editing screen 1300. These select/display fields 1311 to 1317 correspond respectively to the select/display fields 1011 to 1017 shown in Fig. 10, with which they share the final two digits of their respective reference numerals.

Here, the equipment piece number select/display field 1316 displays in the right side part of the equipment name select/display field 1311 on the editing screen, a piece number which corresponds to the equipment name specified by the equipment name select/display field 1311, and sets the piece number when the user selects the number.

An equipment correction button 1318, an equipment addition button 1319, an equipment deletion button 1320, an equipment movement button 1321, a redraw/equipment arrangement data update button 1322, a display range select/display field 1323, a vertical direction display range select/display field 1324, and so on are disposed in the right side part of the editing screen 1300. These elements 1318 to 1024 correspond respectively to the elements 1018 to 621 shown in Fig. 10, with which they share the final two digits of their respective reference numerals. Further, an evaluation calculation button 1331 is disposed in the lower end portion of the editing screen 1300. The evaluation calculation button 1331 realizes the functions of the evaluation calculation activating unit 126 when the evaluation calculation button 1331 is selected.

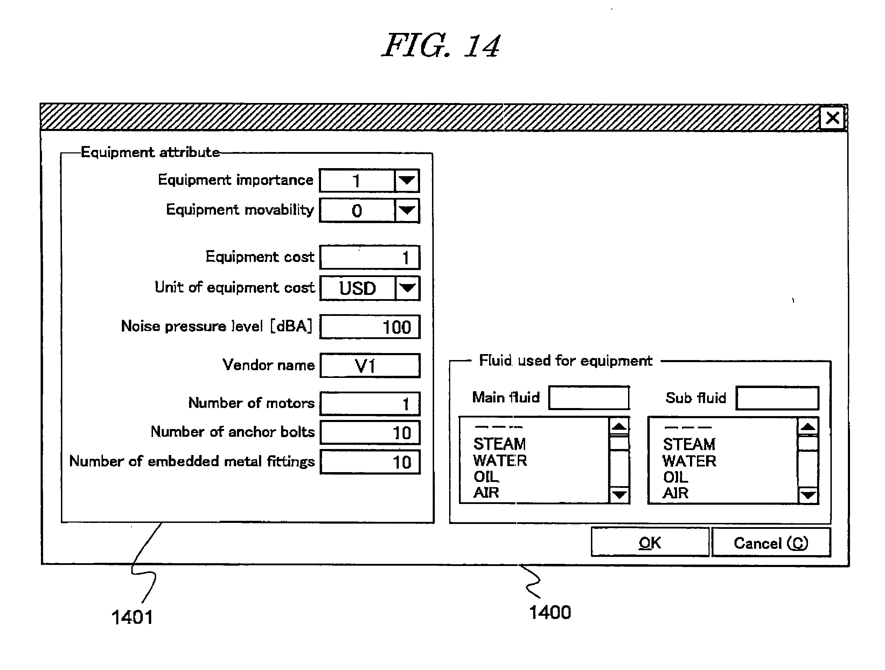

Fig. 14 is a view showing a specific screen display example of an equipment attribute data editing screen 1400. This editing screen 1400 corresponds to the equipment attribute data editing control unit 1000b shown in Fig. 10B, and is constituted by a sub-screen which is switched to from the main editing screen 1300 of Fig. 13 or displayed in a new window.

As shown in Fig. 14, an attribute information select/display field 1401 is disposed on the editing screen 1400 for inputting various attribute information not provided on the main editing screen 1300. The attribute information select/ display field 1401 corresponds to the product information select/display field 1031, noise information select/display field 1033 (only sound pressure level information of noise), and constraint information select/display field 1034 shown in Fig. 10B.

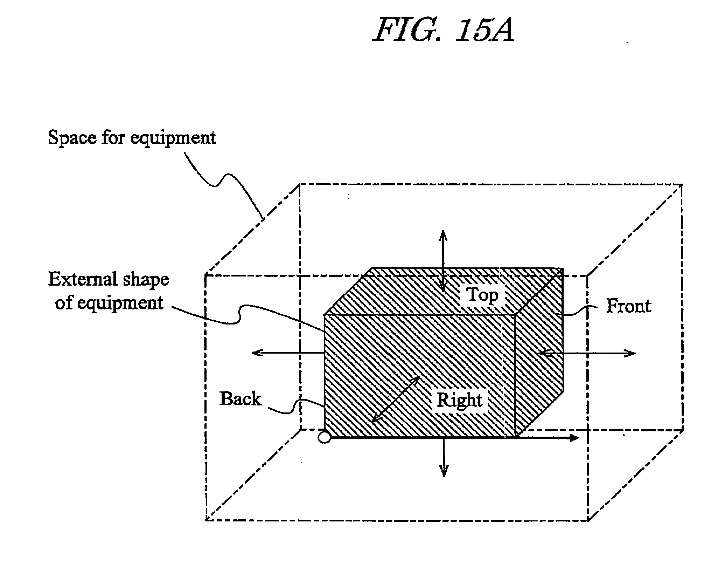

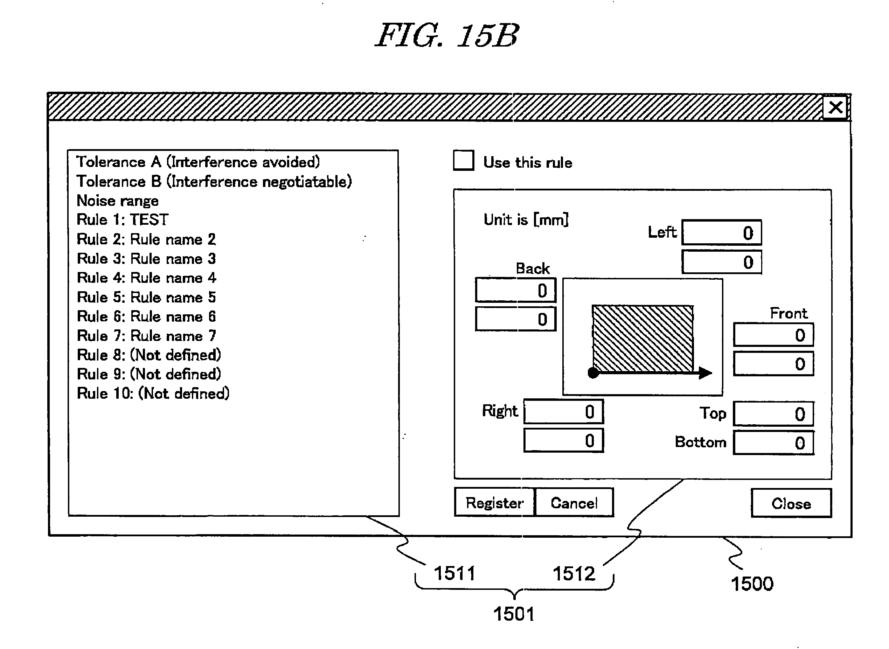

Further Fig. 15A is a schematic view showing an interference prohibition area of an equipment, and Fig. 15B is a view showing a specific screen display example of an editing screen which is capable of editing both of interference prohibition area information and noise area information. On the editing screen 1500 of Fig. 15B, an interference prohibition area information select/display field 1501 is shown. The interference prohibition area information select/display field 1501 is configured by a space type/rule select/display field 1511 for selecting a space type and rule name, and a numerical value setting select/display field 1512 for setting a numerical value for the selected space type.

With the interference prohibition area information select/display field 1501, an interference prohibition area is selected by the space type/rule select/display field 1511 and the distance from each surface of a rectangular parallelepiped equipment is set, so that an interference prohibition area can be set in terms of three-dimension, as shown in Fig. 15A, and represented on a depiction screen. Here, Fig. 15A is a view showing an interference prohibition area in terms of three-dimension. Such interference prohibition area is displayed on the real depiction screen in two-dimension, but can be represented in terms of three-dimension by setting the distance from the top surface and bottom surface of the area.

Here, as shown in the space type/rule select/display field 1511 of Fig. 15B, the interference prohibition area is referred to as "tolerance", which is used as meaning of a room space required for an equipment, and specifically, means a space for maintenance required for equipment maintenance, a space for bringing out an inner component, a space for accessing such as checking an instrument, or operating a valve or terminal box.

Besides those spaces, various spaces according to various laws and regulations may be set as an interference area. In Fig. 15B, a "rule" list is indicated in the space type/rule select/display field 1511, so that the interference area can be set for each rule. For example, according to the regulations of Fire Laws, it is required to make sure that a space of a prescribed distance is kept between facilities which handle dangerous objects and high pressure gas facilities to which a business license and notification is required, therefore, in this case, the space is set using rules defined according to the regulations. Note that an equipment to be arranged may be of that does not come under the regulations and to which any rule is not applied, and in this case, in Fig. 15B, the check box of "use this rule" is turned to "off".

(5) Specific editing process of equipment arrangement data

With using the editing screen shown in Fig. 13, the equipment arrangement data can be edited in the following manner.

First, the equipment name select/display field 1311 on the editing screen 1300 reads the equipment arrangement data from the equipment arrangement database 132 and displays the equipment names on a pull-down menu. Subsequently, the equipment number select/display field 1316 displays the piece numbers on a pull-down menu which correspond to the equipment name specified by the equipment name select/display field 1311, and allows the user to select one of the piece numbers to set the selected piece number. Note that the initial value of the piece number is "1".

When an equipment name is selected from the pull-down menu, the equipment arrangement select/display field 1313, equipment shape/dimension select/display field 1314, and parent building select/display field 1315, can display the arrangement coordinates and angle of the equipment, the shape and dimensions of the equipment, the name of the parent building, and so on, and allow the user to select for correcting the displayed items. The existence of a parent building indicates that when an equipment is disposed inside the parent building, the equipment moves integrally with the building.

Further, the color scheme of the equipments can be displayed and corrected on a color scheme select/display field 1312a associated with the equipment attribute editing select/display field 1312. With regard to a plurality of pieces corresponding to a single equipment name, the color scheme of the pieces can be changed as an equipment unit.

In addition, a plurality of equipments can be registered as a group with group name on a group select/display field 1312b associated with the equipment attribute editing select/display field 1312. With the group select/display field 1312b, when the group names of groups registered in the past are displayed on a pull-down menu and a group name of them are selected, the equipments of the group are highlighted on a depiction screen in a format such as display of a colored bold outline. In this case, the equipment group highlighted on the depiction screen can also be moved as a group unit.

When the editing screen 1400 is displayed by the equipment attribute editing select/display field 1312 of the editing screen 1300, the importance, movability, cost, unit of cost, noise pressure level, vendor name, number of motors, number of anchor bolts, number of embedded metal fittings, and so on of the equipment can be displayed and selected to be corrected on the attribute information select/display field 1401 of the editing screen 1400. This information is useful when performing a simple tabulation of the amount of materials during editing of the user-specified range data.

Further, the CAD equipment select/display field 1317 of the editing screen 1300 converts the specified equipment into a two-dimensional CAD equipment drawing symbol or a three-dimensional equipment model in conjunction with the CAD conversion unit 150, and displays the result of the conversion. For example, the CAD data may be obtained by pre-associating an equipment number used in the two-dimensional CAD equipment drawing symbol database 160 and the three-dimensional CAD equipment model database with an equipment name in the equipment arrangement data.

Alternatively, the CAD data may be displayed by activating a separate application program to the application program for realizing the layout editing unit 120, or by developing a display program together with the program of the layout editing unit 120 such that the database is completely controlled.

In any case, by subjecting the equipment to CAD display, the designer can intuitively gain a comprehensive and clear overview of the layout design, and can avoid spatial recognition errors during subsequent layout editing work.

The modification content of the equipment attribute data editing screen 1400, equipment arrangement select/display field 1313, equipment shape/dimension select/display field 1314, parent building select/display field 1315, equipment piece number select/display field 1316, and so on is confirmed as modified data by pressing the equipment correction button 1318.

By pressing the equipment addition button 1319, equipment deletion button 1320, or equipment movement button 1321, data relating to a new equipment can be added, data relating to an unnecessary equipment can be deleted, and an equipment can be moved. Further, by pressing the redraw/equipment arrangement data update button 1322, in accordance with the equipment arrangement data edited on the editing screen 1300, the equipments can be redrawn on a depiction screen and the equipment arrangement database 132 can be updated.

Further, in this embodiment, the minimum value and the maximum value in the vertical direction can be selected by the vertical direction display range select/display field 1324 of the editing screen 1300, equipments within a prescribed range in the vertical direction can be displayed. Namely, when the minimum and maximum value can be modified on the vertical direction display range select/display field 1324, the screen range to be depicted can be modified on the depiction screen described later. However, the layout in two-dimension is actually depicted on the depiction screen, so that modification of the value in the vertical direction gives no modification to the depiction image when the modified value is within the vertical direction display range.

(6) Depiction screen example

(6-1) Building with one floor

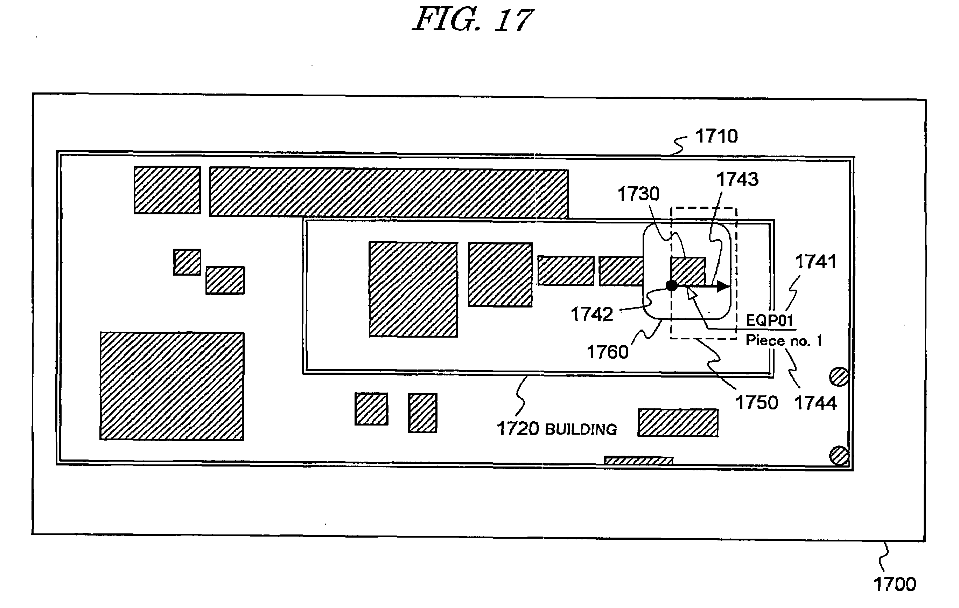

Next, a specific screen display example of a depiction screen 1700 for equipment arrangement data is explained below, referring to Fig. 17. Here, Fig. 17 shows a layout of the equipment arrangement data when a plurality of equipments are disposed on a first floor of a building.

As shown in Fig. 17, the depiction screen 1700 displays a building 1720 and a plurality of equipments 1730 within an entire layout range 1710. In relation to the equipment 1730 being edited, a name label 1741, an arrangement point 1742, an arrangement direction arrow 1743, a piece number 1744, an interference prohibition area range 1750, a noise area range 1760, and so on are displayed in a visually-emphasized manner.

In this case, the interference prohibition area range 1750 is determined in consideration of equipment workability and maintainability. For example, the interference prohibition area range 1750 may be displayed by inputting a distance from each of the six surfaces which configures the equipment. The noise area range 1760 may be displayed by calculating the difference between the sound pressure level of the equipment and the sound pressure level at the contour display boundary, and calculating the distance to the boundary sound pressure level from the sectional area of the equipment, for example. Note that the interference prohibition area range and noise area range are merely examples of attribute information relating to the range of the equipment, and various other attribute information may be expressed similarly in the form of equipment ranges.

(6-2) Building with a plurality of floors

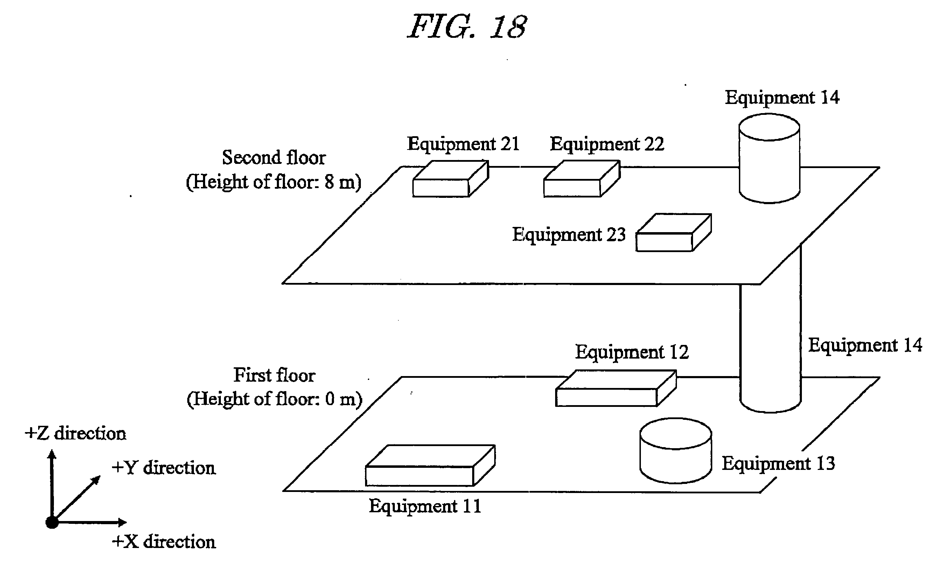

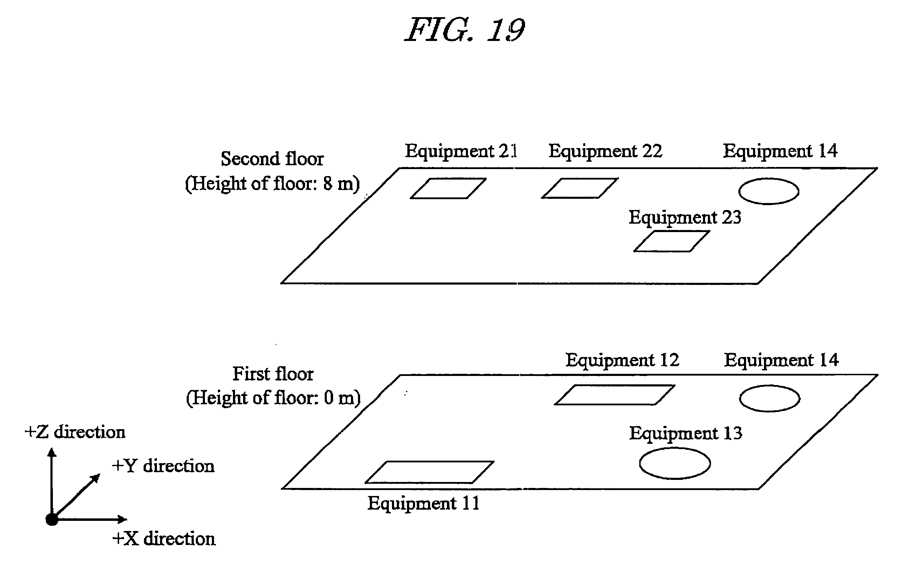

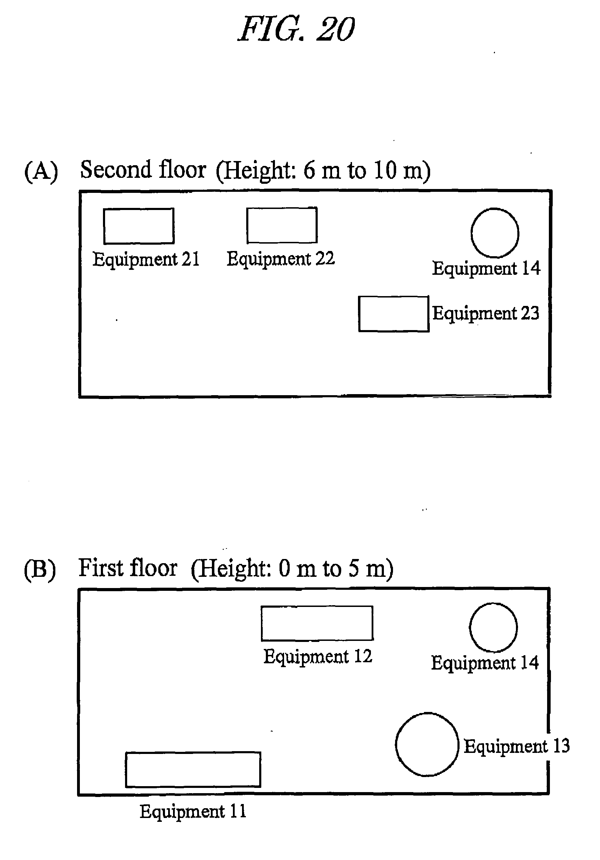

Next, a depiction screen for equipment arrangement data is explained below, referring to Figs. 18 to 20, which give an example of a building with a plurality of floors, Here, Figs. 18 and 19 are schematic views for simulating the layout which is depicted on a depiction screen of the interface unit 110 by the depiction control unit 1100. Actually, a layout in two-dimension as shown in Fig. 20, is depicted.

First, referring to the schematic view of Fig. 18, the first floor has a height of 0 meter and the equipments 11, 12, 13, and 14, are disposed on the floor. Here, the equipment 14 is disposed on the first floor, but higher than other equipments and the upper part thereof passes through and projects above the second floor which has a height of 8 meters. Further, the equipments 13 and 14 are cylinder shape tanks, while the other equipments are displayed in rectangular parallelepiped shapes.

Fig. 19 represents the image of Fig. 18, as a perspective view in two-dimension, and the XY coordinates are in common between the first and second floors. That is, the first floor equipments 11, 12, 13 and 14 and the second floor equipments 21, 22 and 23 are represented in two-dimension, and the equipments 14 also is represented on the second floor.

Here, in the schematic views shown in Figs. 18 and 19, through the vertical direction display range select/ display field 1324 of the editing screen 1300 shown in Fig. 13, when the height in vertical direction of the second floor is set as a value from 6 meters (minimum value) to 10 meters (maximum value) and the height in vertical direction of the first floor is set as a value from 0 meter (minimum value) to 5 meters (maximum value), a depiction screen is generated by the depiction control unit 1100, as shown in Figs. 20A and 20B. That is, as shown in Fig. 20A, regarding the second floor having a height of 6 to 10 meters, a layout is depicted in which the equipment 21, equipment 22, equipment 23, and equipment 14 are disposed. Here, the equipment 14 is disposed on the first floor and projected above the second floor. Further, regarding the first floor having a height of 0 to 5 meters, a layout is depicted in which the equipment 11, equipment 12, equipment 13, and equipment 14 are disposed.

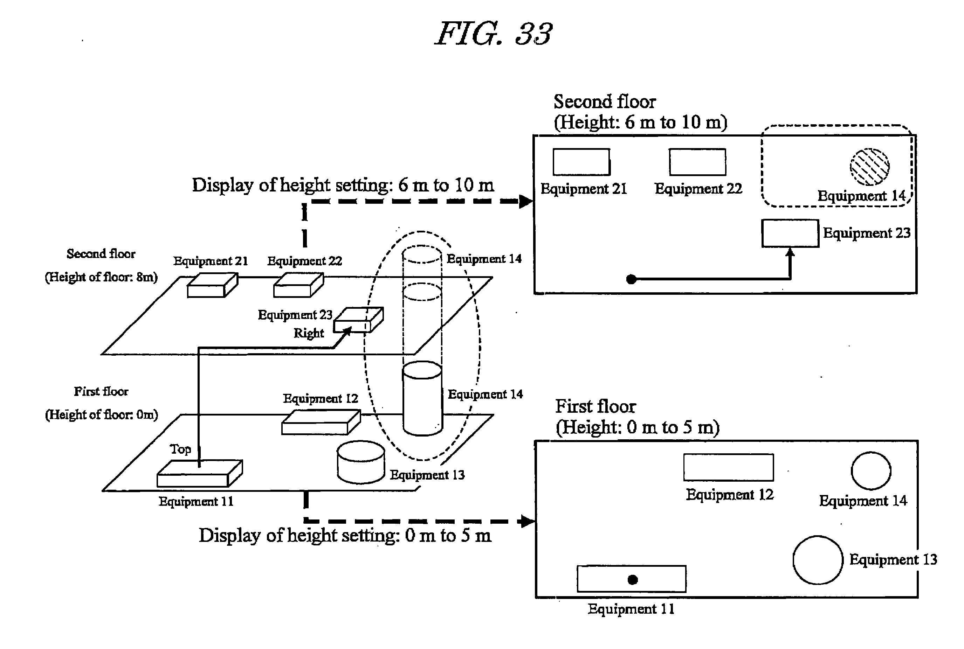

Further, Fig. 33 is a depiction screen example in consideration of the case in which the first floor equipment 14 has a height of not achieved the second floor, but a maintenance space which extends above the second floor is required for the equipment. On the depiction screen shown in Fig. 33, when an interference prohibition area is set as a room space (for example, maintenance space) extending above the second floor, in accordance with this information, the interference prohibition area is depicted within the display range by the depiction control unit 1100, even if the equipment body does not exist within the display range. In this case, the equipment outside the display range in the vertical direction, is depicted with a specific color (stroke color, fill color) to remarkably indicate the difference by the depiction control unit 1100

(6-3) Equipment configured by a plurality of pieces

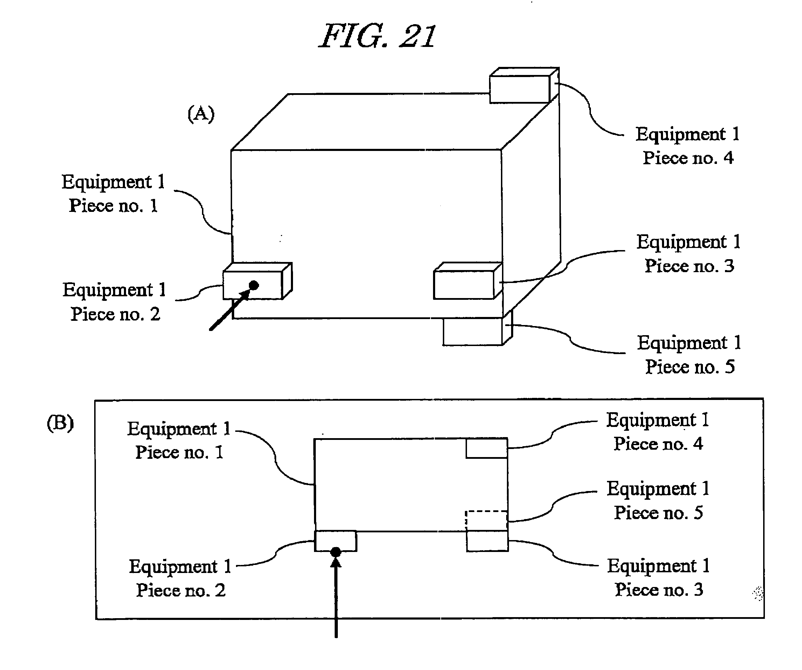

Next, a depiction screen of an equipment formed by combining a plurality of pieces, is explained below, referring to Fig. 21. Here, Fig. 21A is a schematic view showing an equipment 1 configured by a plurality of rectangular parallelepiped pieces which correspond respectively to piece numbers 1 to 5. Fig. 21B is a depiction screen on which the equipment shown in Fig. 21A is actually displayed.

As shown in Fig. 21A, the equipment configured by the plurality of rectangular parallelepiped pieces of piece numbers 1 to 5, is generated as a result of repeating the flowchart shown in Fig. 12 by the depiction control unit 1100. In Fig. 21A, the equipment 1 is configured by fixing rectangular parallelepiped pieces of piece numbers 2 to 5 on a rectangular parallelepiped piece of piece number 1. Here, in the piece of piece number 2, an interface point is shown in simulated manner, which is used for connecting the piping or cables lead from the outside.

Further, on a depiction screen actually depicted by the depiction control unit 1100, as shown in Fig. 21B, the equipment shown in Fig. 21A is represented in two-dimension and the arrangement of the pieces of piece numbers 1 to 5 is represented to be intuitively and comprehensively grasped. Note that piping or cables are to be connected with the piece of piece number 2, and this plan also is represented in two-dimension.

Further, the piece of piece number 5, is fitted on the bottom surface of the piece of piece number 1, so the piece of piece number 5 is depicted with a dotted line. As described above, the equipment configured by a plurality of pieces shown in Fig. 21, in accordance with operations on the editing screen 1300, each piece can be moved, rotated, or modified in size, separately, or can be moved or rotated as a single equipment 1 configured by combining the pieces.

[2.2.3. Equipment Connection Element Data Editing Process]

(1) Configuration of editing control unit

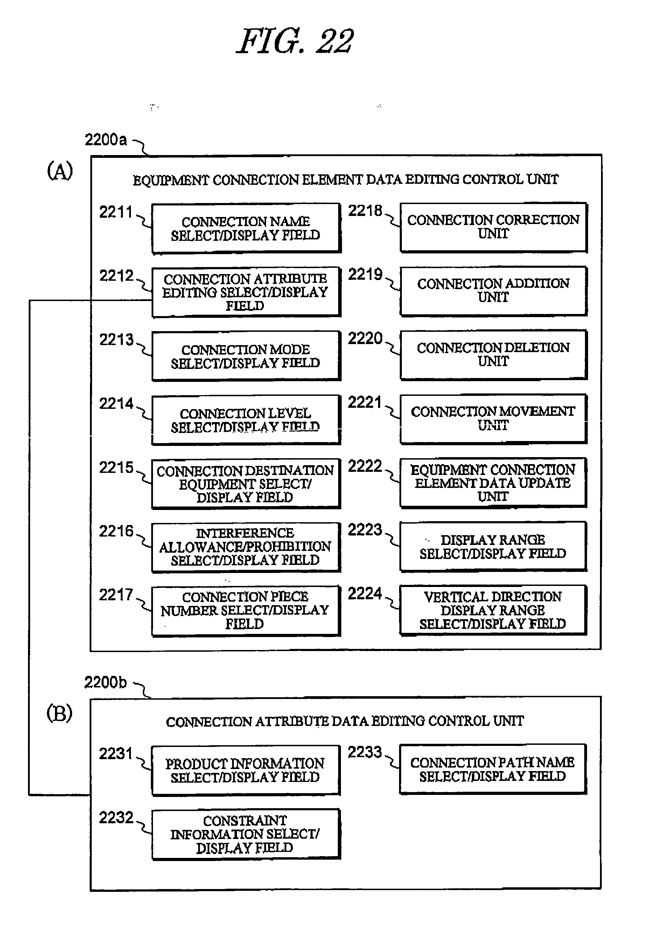

Figs. 22A and 22B are views showing a functional configuration example of editing control units for equipment connection element data in the equipment connection element data editing unit 123, Fig. 22A showing an equipment connection element data editing control unit 2200a, and Fig. 22B showing an equipment connection attribute data editing control unit 2200b. The editing control units 2200a and 2200b each cause the interface unit 110 to display an editing screen for the equipment connection element data, perform various display processes for supporting various operations on the displayed editing screen, and accept various inputs from a user to edit the equipment connection element data.

As shown in Fig. 22A, the equipment connection element data editing control unit 2200a, comprises a connection name select/display field 2211 which displays a connection name and allows the user to select the name or change into another name, and a connection attribute editing select/display field 2212 which displays an indication of a function for editing connection attribute data relating to the attributes of the connection specified on the connection name select/display field 2211, allows the user to select the function, and displays an editing screen for the connection attribute data when the function is selected.

The equipment connection element data editing control unit 2200a comprises a connection mode select/display field 2213 which displays and corrects the connection mode (piping, cable, or the like) of the connection specified on the connection name select/display field 2211, and a connection level select/display field 2214 which displays and corrects the connection level of the connection specified on the connection name select/display field 2211. The equipment connection element data editing control unit 2200a also comprises a connection destination equipment select/display field 2215 which displays and corrects the name of the upstream connection destination equipment and the connection port thereof, and the name of the downstream connection destination equipment and the connection port thereof, in relation to the connection specified on the connection name select/display field 2211, and an interference allowance/ prohibition select/display field 2216 which allows the user to select whether an interference is allowed or not between the connection specified on the connection name select/display field 2211 and another connection.

Further, in this embodiment, the equipment connection element data editing control unit 2200a also comprises a connection piece number select/display field 2217 which displays the piece numbers of the upstream connection destination equipment and down stream connection destination equipment, and sets the piece numbers when the user select it. In other words, the connection piece number select/display field 2217 can display the piece numbers of the upstream/downstream connection destination equipments in relation to the connection specified on the connection name select/display field 2211, and can set the piece numbers in accordance with an input from the user.

The equipment connection element data editing control unit 2200a further comprises as units for correcting, adding, deleting, or moving an equipment connection element specified on the connection name select/display field 2211 on the depiction screen, a connection correction unit 2218, a connection addition unit 2219, a connection deletion unit 2220, and a connection movement unit 2221, which display a correction button, a addition button, and a deletion button, and a movement button, respectively on the editing screen, and accept an input to perform various operations. Here, the connection correction unit 2218, when having accepted a correction input from the correction button, corrects the specified equipment connection element in accordance with the content set on the connection attribute data editing control unit 2200b, the connection mode select/display field 2213, the connection level select/display field 2214, the connection destination equipment select/display field 2215, and the interference allowance/prohibition select/display field 2216.

The equipment connection element data editing control unit 2200a further comprises an equipment connection element data update unit 2222 which displays a update button on the editing screen, accepts an input to obtain data relating to the position and dimensions of the equipment connection element edited by the editing control unit 2200a and reflects these data in the equipment connection element database 133 as an equipment connection element data editing result.

The equipment connection element data editing control unit 2200a further comprises a display range select/ display field 2223 which selects the entire layout range (entire site area) or the building range as the display range, and changes the display angle of the display range. The display range select/display field 2223 serves as means for realizing the functions of the display range modification unit 128 on an editing screen so that the display range is switched between an entire layout range depiction screen and a building range depiction screen, and the display angle is switched on the building range depiction screen. In this embodiment, the editing control unit 2200a further comprises a vertical direction display range select/display field 2224, allows the user to select as restriction values in Z direction the peak value and bottom value, and sets the display range in the vertical direction in accordance with input Z-direction range.

As shown in Fig. 22B, the connection attribute data editing control unit 2200b comprises a product information select/display field 2231 which displays and corrects product information relating to the connection specified on the connection name select/display field 2211 such as the sectional width, height, weight, and cost. The connection attribute data editing control unit 2200b further comprises a constraint information select/display field 2232 which displays and corrects constraint information required for optimization calculation of the connection specified on the connection name select/display field 2211.

The connection attribute data editing control unit 2200b also comprises a connection path name select/display field 2233 which displays and corrects the connection path name and control point (node) information of the connection specified on the connection name select/display field 2211.

Note that, when the equipment connection element data update unit 2222 of the editing control unit 2200a accepts an input through the update button displayed on the editing screen by the interface unit 110, the results of the equipment connection element data editing process performed by the editing control units 2200a and 2200b shown in Fig. 22 are stored in the equipment connection element database 133 as updated equipment connection element data.

(2) Configuration of depiction control unit

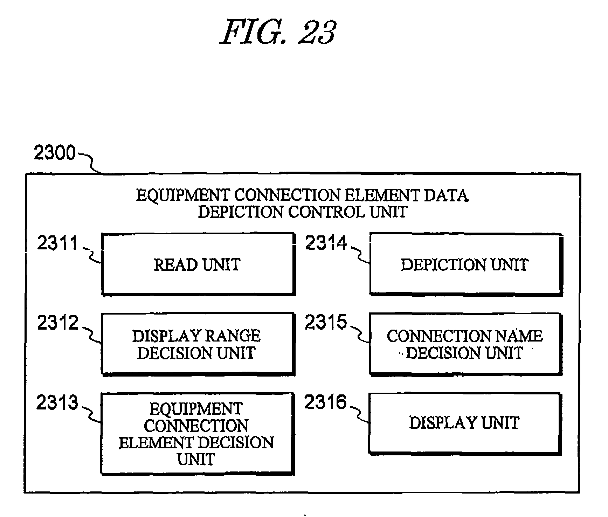

Next, the configuration of a depiction control unit for depicting the equipment connection element data edited by the editing control units 2200a and 2200b, is explained below, referring to Fig. 23. Here, Fig. 23 is a view showing a functional configuration example of depiction control unit 2300 for equipment connection element data in the equipment connection element data editing unit 123. The equipment arrangement data depiction control unit 2300 causes the interface unit 110 to display a depiction screen for the equipment connection element data, performs various processes for depicting the equipment connection element data on the displayed depiction screen.

As shown in Fig. 23, the equipment connection element data depiction control unit 2300 comprises a read unit 2311 for reading a specification, arrangement coordinates, size, and so on regarding equipment arrangement for depiction use from the equipment connection element database 133 of the storage unit 130. The equipment connection element data depiction control unit 2300 also comprises a display range decision unit 2312 for deciding whether a building is set for the display range or not through the display range select/display field 2223 of the editing control unit 2200a.

The depiction control unit 2300 also comprises an equipment connection element decision unit 2313 for deciding whether or not an equipment connection element read from the equipment connection element database 133 through the read unit 2311 is disposed within a building if the display range decision unit 2312 has decided that the building is set for the display range.

The depiction control unit 2300 also comprises a depiction unit 2314 for depicting on a depiction screen the equipment connection element layout design data generated by various processes of the editing control units 2200a and 2200b. The depiction unit 2314 depicts the equipment connection element layout design data on the depiction screen within the vertical display range (within defined by the peak and bottom values in Z direction) set by the vertical direction display range select/display field 2224.

Further, the depiction control unit 2300 comprises a connection name decision unit 2315 for deciding whether or not the equipment connection element name of an equipment depicted by the depiction unit 2314 corresponds to the connection name specified by the connection name select/display field 2211, and a display unit 1116 for causing the interface unit 110 to actually display the connection element on a depiction screen. When the connection name decision unit 2315 has decided that the connection name corresponds to the specified connection name, the display unit 2316 changes the display mode of the connection element (for example, visually emphasized display by changing the color scheme). Note that, when equipment connection element data is displayed on a depiction screen by the display unit 2316, equipment arrangement data has already been displayed on the depiction screen which has been depicted by the equipment arrangement data editing depiction control unit 1100.

(3) Layout design flow of equipment connection element data

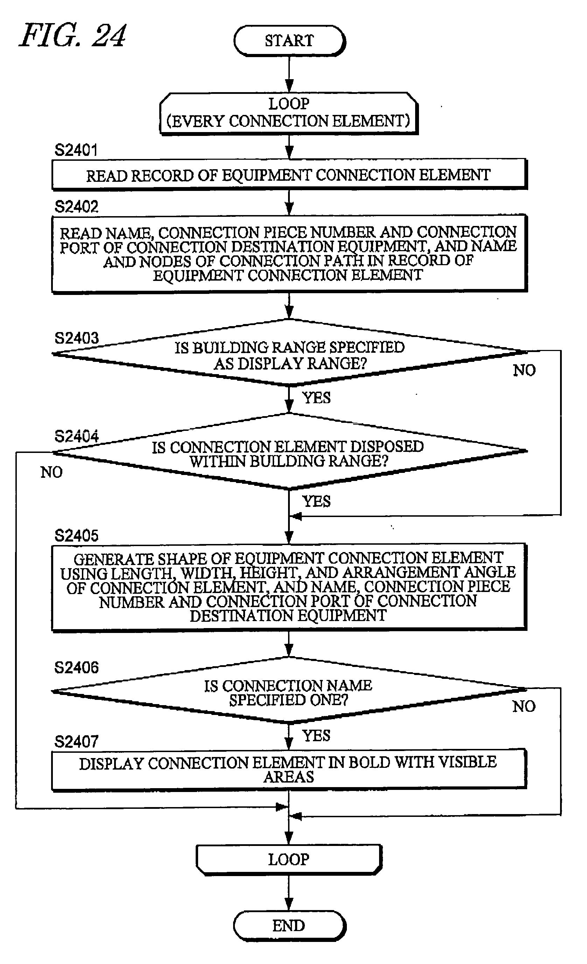

Next, referring to Fig. 24, a flow of display process when the equipment connection element data, which is stored in the equipment connection element database 133, is read and an equipment connection element is displayed on the depiction screen by the equipment connection element data depiction control unit 2300. As shown in Fig. 24, equipment connection element display is performed in the following manner as a loop process (LOOP) executed in units of the equipment connection element records stored in the equipment connection element database 133.

First, a record relating to each equipment connection element is read from the equipment connection element database 133 of the storage unit 130 in record sequence by the read unit 2311 (S2401), and then the connection destination building name, connection piece number, connection port, connection path name and node registered in the equipment connection element record is read (S2402). Whether the building range is specified as the display range is decided by the display range decision unit 2312 (S2403). When the building range is specified (YES in S2403), whether the read equipment connection element is disposed within the specified building range is decided by the equipment connection element decision unit 2313 (S1204).

Only if the equipment is disposed within the specified building range (YES in S2404), the shape of the equipment connection element is generated by the depiction unit 2314 (S2405) using the connection destination equipment name, connection piece number and connection port of the equipment connection element. When the display range decision unit 2312 has decided that the building range is not specified as the display range (NO in S2403), the shape of the equipment connection element is generated as is by the depiction unit 2314 (S2405).

When the connection name decision unit 2315 has decided that the connection name of the equipment connection element corresponds to the connection name specified by the connection name select/display field 2211 (YES in S2406), the equipment connection element is displayed in a visually-emphasized manner, for example, on a depiction screen by the display unit 2316.

When the loop process described above has been repeated for the records of all of the equipment connection element registered in the equipment connection element data and all of the equipment connection element have been displayed, the process ends. Note that when an operation is performed for adding, correcting, deleting, or moving an equipment connection element on the editing screen during equipment connection element data editing process by the editing control unit 2200a, the equipment connection element database 133 is updated in relation to the corresponding equipment connection element, and then the loop process described above is executed on the record of the corresponding equipment connection element alone.

(4) Editing screen example

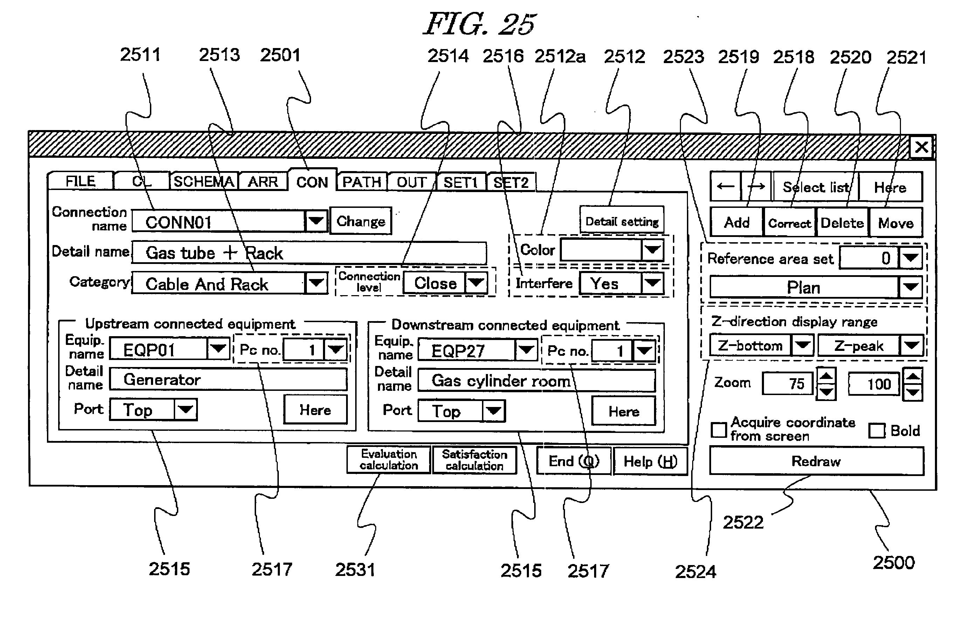

Next, an editing screen example for equipment connection element data is explained below, referring to Fig. 25. Here, Fig. 25 shows a specific screen display example of an editing screen 2500 for equipment arrangement data. This editing screen 2500 corresponds to the equipment connection element data editing control unit 2200a shown in Fig. 22A, and is used to switch between the aforementioned building data editing screen 900, equipment arrangement data editing screen 1300, and a plurality of other editing screens through the use of tabs 2501 displayed in the upper end portion.

As shown in Fig. 25, a connection name select/display field 2511, a connection attribute editing select/display field 2512, a connection mode select/display field 2513, a connection level select/display field 2514, a connection destination equipment select/display field 2515, an interference allowance/prohibition select/display field 2516, and so on are disposed in the left-of-center part of the editing screen 2500. These select/display fields 2511 to 2516 correspond respectively to the select/display fields 2211 to 2216 shown in Fig. 22, with which they share the final two digits of their respective reference numerals.

Here, in this embodiment, on the editing screen 2500, a connection piece number select/display field 2517 is disposed which display the piece number respectively for the upstream connection equipment and downstream connection equipment in the connection destination equipment select/display field 2515, and allows the user to select the piece number. The connection piece number select/display field 2517 on the editing screen 2500 corresponds to the connection piece number select/display field 2217 shown in Fig. 22.

A connection correction button 2518, a connection addition button 2519, a connection deletion button 2520, a connection movement button 2521, a redraw/equipment connection element data update button 2522, a display range select/display field 2523, a vertical direction display range select/display field 2524, and so on are disposed on the right side part of the editing screen 2500. These elements 2518 to 2524 correspond respectively to the elements 2218 to 2224 shown in Fig. 22, with which they share the final two digits of their respective reference numerals. An evaluation calculation button 2531 is disposed in the lower end portion of the editing screen 2500. The evaluation calculation button 2531 realizes the functions of the evaluation calculation activating unit 126.

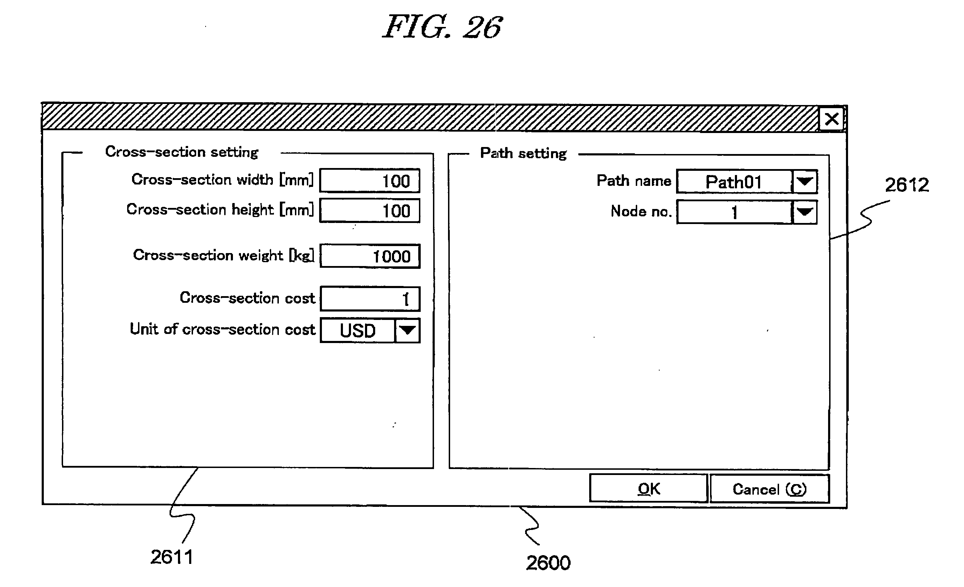

Further, Fig. 26 is a view showing a specific screen display example of a connection attribute data editing screen 2600. This editing screen 2600 corresponds to the connection attribute data editing unit 2200b shown in Fig. 22B, and is constituted by a sub-screen which is switched to from the main editing screen 2500 of Fig. 25 or displayed in a new window.

As shown in Fig. 26, a cross-section information select/display field 2611 is disposed on the editing screen 2600 for inputting a plurality of attribute information relating to the cross-section of the equipment connection element. The cross-section information select/display field 2611 corresponds to the product information select/display field 2231 and the constraint information select/display field 2232 shown in Fig. 22. Further, a connection path name select/display field 2612 is disposed on the editing screen 2600 for inputting the connection path name of an equipment connection path and information regarding the control points thereof. The connection path name select/display field 2612 corresponds to the connection path name select/display field 2233 shown in Fig. 22.

(5) Specific editing process of equipment connection element data

With using the editing screen 2500 shown in Fig. 25, the equipment connection element data can be edited in the following manner.

First, the connection name select/display field 2511 on the editing screen 2500 reads the equipment connection element data from the equipment connection element database 133 and displays the connection names on a pull-down menu.

When a connection name is selected from the pull-down menu in the connection name select/display field 2511, the connection mode select/display field 2513 and connection level select/display field 2514 displays the connection mode, for example piping or cable, the connection level, and so on, and allows the user to select for correcting those. Further, when a connection name is selected, the connection destination equipment select/display field 2515 displays the equipment names of the connection destination equipments on the upstream side and downstream side, piece number and port thereof, and so on, and allows the user to select for correcting those. In this case, the connection piece number select/display field 2517 on the connection destination equipment select/display field 2515 reads the piece numbers which correspond to the equipment names of the connection destination equipments on the upstream side and downstream side, and displays the piece numbers on a pull-down menu, or allows the user to select a corresponding piece number for setting the selected piece number. Note that the initial value of the piece number is "1". Further, the port displayed on the connection destination equipment select/display field 2515 can be optionally selected from not only front, back, right and left surfaces, but also top and bottom surfaces.

Further, the color scheme of the equipment connection elements can be displayed and corrected on a color scheme select/display field 2512a associated with the connection attribute editing select/display field 2512. Note that the color scheme of a plurality of equipment pieces corresponding to the same connection name can be modified in a lump for each equipment connection element.

When the editing screen 2600 is displayed by the connection attribute editing select/display field 2512 of the editing screen 2500, the connection cross-section width, height, weight per unit length, cost per unit length, unit cost, and so on can be displayed and corrected on the cross-section information select/display field 2611 of the editing screen 2600. This information is useful when performing a simple tabulation of the amount of materials during editing of the user-specified range data.

The modification content of the connection attribute data editing screen 2600, connection mode select/display field 2513, connection level select/display field 2514, connection destination equipment select/display field 2515, and so on is confirmed as modified data by pressing the connection correction button 2518.

Further, by pressing the connection addition button 2519, connection deletion button 2520, or connection movement button 2521, data relating to a new equipment connection element can be added, data relating to an unnecessary equipment connection element can be deleted, and an equipment connection element can be moved. Further, by pressing the redraw/equipment connection element data update button 2522, the equipment connection element on the depiction screen can be redrawn in accordance with the equipment connection element data edited on the editing screen 2500, and the equipment connection element database 133 can be updated.

Further, in this embodiment, the same as the equipment arrangement data editing screen, the minimum value and the maximum value in the vertical direction can be selected by the vertical direction display range select/display field 2524 of the editing screen 2500, connection elements within a prescribed range in the vertical direction can be displayed. Namely, when the minimum and maximum value can be modified on the vertical direction display range select/display field 2524, the screen range to be depicted can be modified on the depiction screen described later. However, the layout in two-dimension is actually depicted on the depiction screen, so that modification of the value in the vertical direction gives no modification to the depiction image when the modified value is within the vertical direction display range.

(6) Depiction screen example

(6-1) Connection between equipments in terms of three-dimension

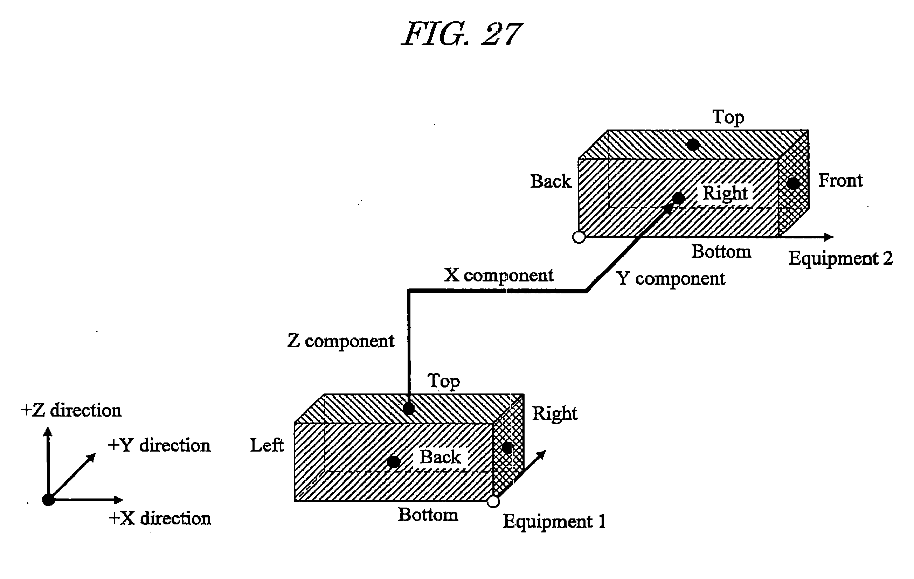

Next, a specific screen display example of a depiction screen for equipment connection element data is explained below, referring to Fig. 27. Here, Fig. 27 is a schematic view showing an equipment connection element such as piping or cables which are depicted as a connection element connecting between an upstream equipment 1 and downstream equipment 2 using three components of XYZ.

As shown in Fig. 27, the equipment connection element data depiction control unit 2300 depicts the equipment connection element data designed by the editing control unit 2200 such that the connection element starts from the upstream equipment 1 and reaches the down stream equipment 2 to connect between the equipments. In more detail, using the representative points which are disposed respectively at the center of each surface of the equipment configured as a rectangular parallelepiped body, and an equipment connection element is depicted such that the representative points are connected with each other between the two equipments.

In particular, in this embodiment, when designing a layout of equipment arrangement data, the equipment arrangement data editing unit 122 reads as equipment size, not only the length and width, but also height information in the vertical direction, so that an improvement is achieved and the top and bottom surfaces can be used as a connection spot. As a result, in Fig. 27, an equipment connection element is depicted such that the connection element starts from the top surface of the equipment 1 and reaches the right surface of the equipment 2 to connect between the equipments.

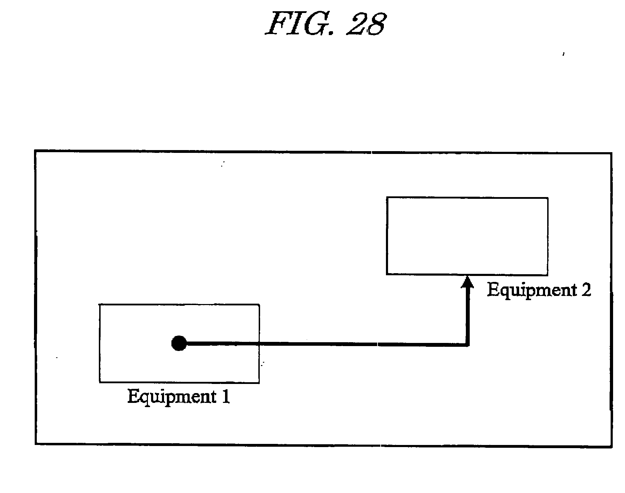

Here, when the schematic view of Fig. 27 is represented on an actual depiction screen, a view of Fig. 28 can be represented, for example. That is, as shown in Fig. 28, the connection from the equipment 1 to the equipment 2 is represented in two-dimension, and so as to indicate the direction from the upstream equipment 1 to the downstream equipment 2, an arrow which directed to the connection destination equipment 2 is attached to the equipment connection element. Further, the editing control unit 2300 can recognize the equipment connection element in three-dimension, and depict it in two-dimension, as a result, the editing control unit 2300 depicts the starting end of the equipment connection element such that the starting end is connected with the representative point on the top surface of the equipment 1.

Note that, there is no concept of flow direction for cables, but if the electric board of the center control room is considered as an upstream equipment and the site board of the cable connection destination is considered as a downstream equipment, a connection relation including direction can be indicated. Further, there is a flow direction of internal fluid in piping, an arrow also is used for indicating the direction. Of course, such arrow of direction can be not-displayed.

(6-2) Building with a plurality of floors

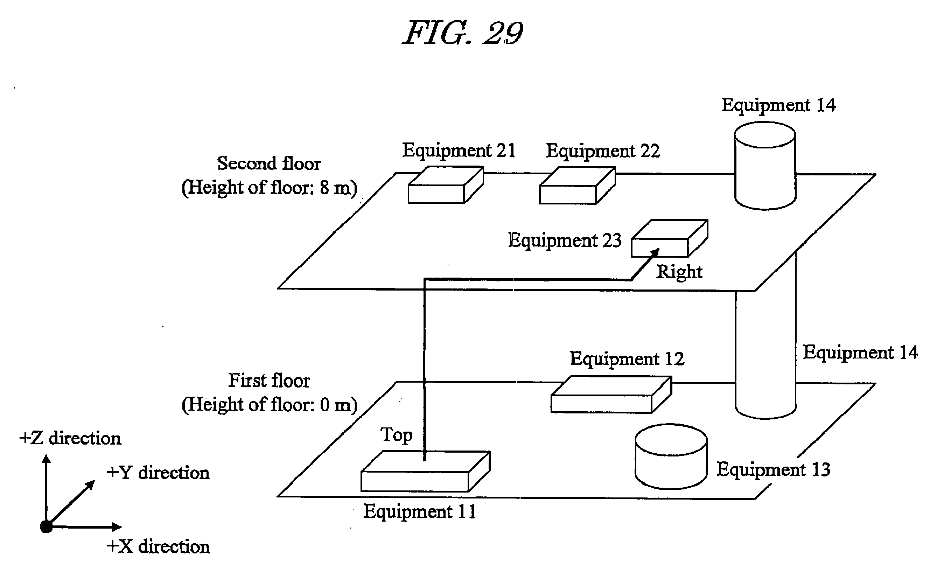

Next, a depiction screen for equipment connection element data is explained below, referring to Figs. 29 to 33, which give an example of a building with a plurality of floors. Here, Figs. 29 to 33 are screen examples in which an equipment connection element is depicted to connect between the equipments on the depiction screen examples for equipment arrangement data shown in Figs. 18 to 20.

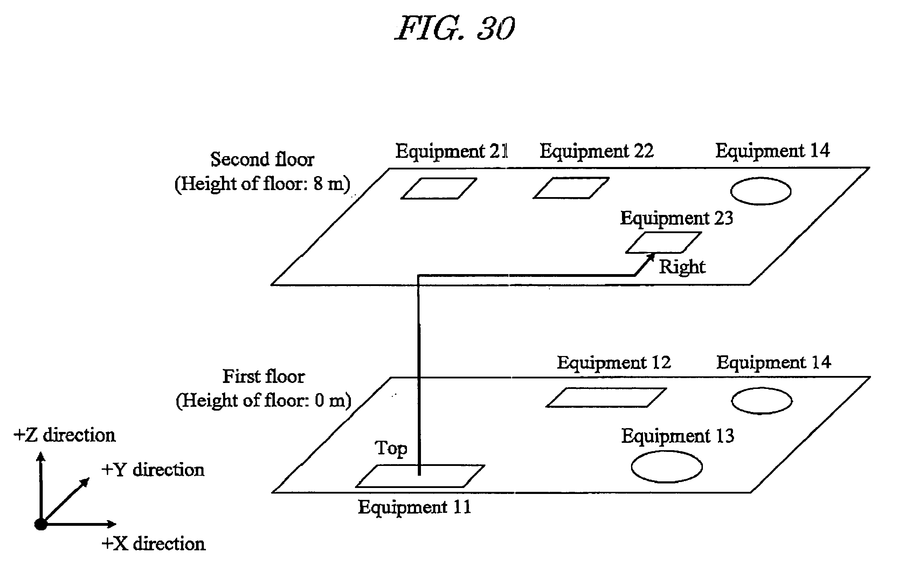

Fig. 29, which corresponds to the image of Fig. 18, is a schematic view for showing an equipment connection element connecting between an equipment 11 and an equipment 23, and piping as the equipment connection element is laid from the top surface of the equipment 11 and connected with the right surface of the equipment 23. Fig. 30 corresponds to the image of Fig. 29.

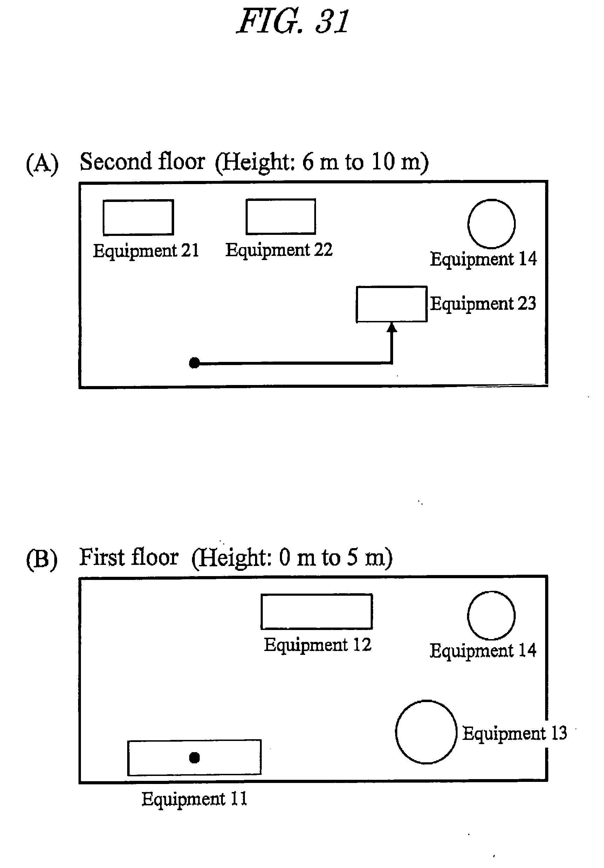

Further, Fig. 31 corresponds to the depiction screen of Fig. 20. As shown in Fig. 31A, by the depiction control unit 2300, on the depiction screen showing a second floor having a height of 6 to 10 meters, the connection element between the equipment 11 and equipment 23, rises from the lower first floor, follows the X-Y surface, and connected to the equipment 23. On the other hand, as shown in Fig. 31B, on the depiction screen showing a first floor having a height of 0 to 5 meters, the connection element is depicted such that the connection element laid from the equipment 11, rises to the upper second floor.

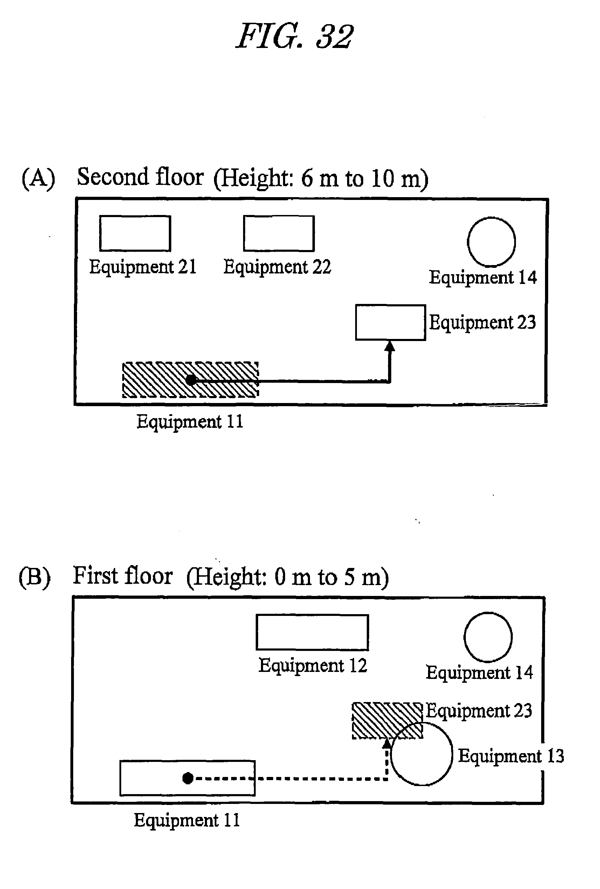

Further, Fig. 32A is a depiction screen in which the equipment 11 of the connection starting side disposed on the first floor, is simulated on the second floor having a height of 6 to 10 meters shown in Fig. 31A. Fig. 32B is a depiction screen in which the equipment 23 of the connection ending side disposed on the second floor, is simulated on the first floor having a height of 0 to 5 meters shown in Fig. 31B.

In other words, as shown in Fig. 32, the depiction control unit 2300 can depict a connection destination equipment within a display range even if the equipment is disposed outside the display range which is set by the vertical direction display range select/display field 2224 of the editing control unit 2200a, in relation to another equipment which is connected with the connection destination equipment and disposed in one building together. That is, the equipment 11 connected with the equipment 23 is represented in Fig. 32A, and the equipment 23 connected with the equipment 11 is represented in Fig. 32B, even if the equipment is disposed outside the vertical display range set by the vertical direction display range select/display field 2224.

Further, the equipment outside the display range in the vertical direction, is depicted with a specific color (stroke color, fill color) to remarkably indicate the difference by the depiction control unit 2300. Furthermore, with regard to the equipment connection element including a part outside the vertical direction display range, as shown in Fig. 32B, the part outside the display range is represented in a special manner such as depiction with a broken line by the depiction control unit 2300.

A selection as to whether connection destination equipment outside the vertical direction display range is displayed or not, can be optionally made on the editing screen 2500.

[2.3. Details of Evaluation Calculation Process]

Next, an evaluation calculation process by the evaluation calculation unit 140 is explained. The evaluation calculation unit 140 performs an evaluation calculation process, including calculation of a layout design data state value or a repeated optimization calculation, using a preset algorithm, and causes the interface unit to display the obtained calculation result on a screen. As described above, the evaluation calculation unit 140 comprises a comparison unit 141 and an animation unit 142.

An evaluation calculation process in the evaluation calculation unit 140 is performed in the following manner. First, three types of data, that is, layout design data (log data) log-output from the layout editing unit 120 upon each editing process, layout design data (past data) created in the past and stored in the storage unit 130, and layout design data (optimization calculation data) obtained as the result of the repeated optimization calculation performed by an optimization calculation unit, are handled as a past record data set by the comparison unit 141.

Then, using this past record data set, a plurality of past record data are superposed, compared, and displayed, a state value calculation is performed with regard to the state of each layout design data, and a graph of the calculation result is displayed by the comparison unit 141, and the layout progress is displayed continuously by the animation unit 142.

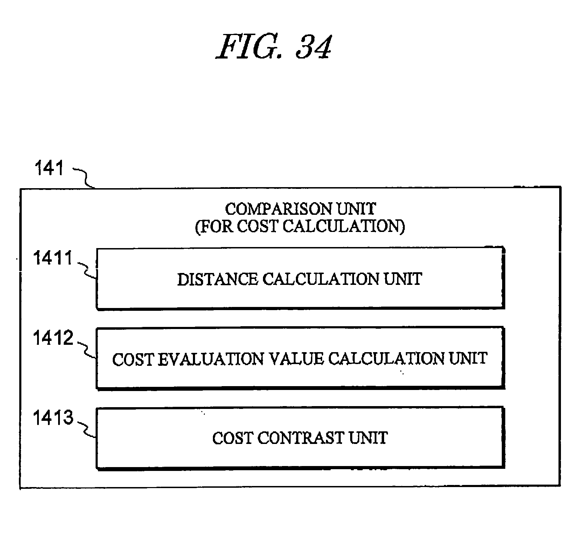

Two examples of different type of processes performed by the comparison unit 141, in relation to each layout design data of a past record data set, are explained below, referring to Figs. 34 to 38.

[2.3.1. Evaluation Calculation Process Using Cost Calculation]

First, an example is explained which calculates costs as evaluation values in relation to each layout design data configuring a past record data set, and compares the evaluation values.

As shown in Fig. 34, the comparison unit 141 comprises a distance calculation unit 1411 which calculates the distance of an equipment connection element connecting between equipments, in relation to each layout design data of a past record data set. The comparison unit 141 also comprises a cost evaluation value calculation unit 1412 which calculates an evaluation value by multiplying the distance calculated through the distance calculation unit 1411 by a cost, and a cost contrast unit 1413 which contrasts the evaluation values for each layout design data of the past record data set calculated by the cost evaluation value calculation unit 1412.

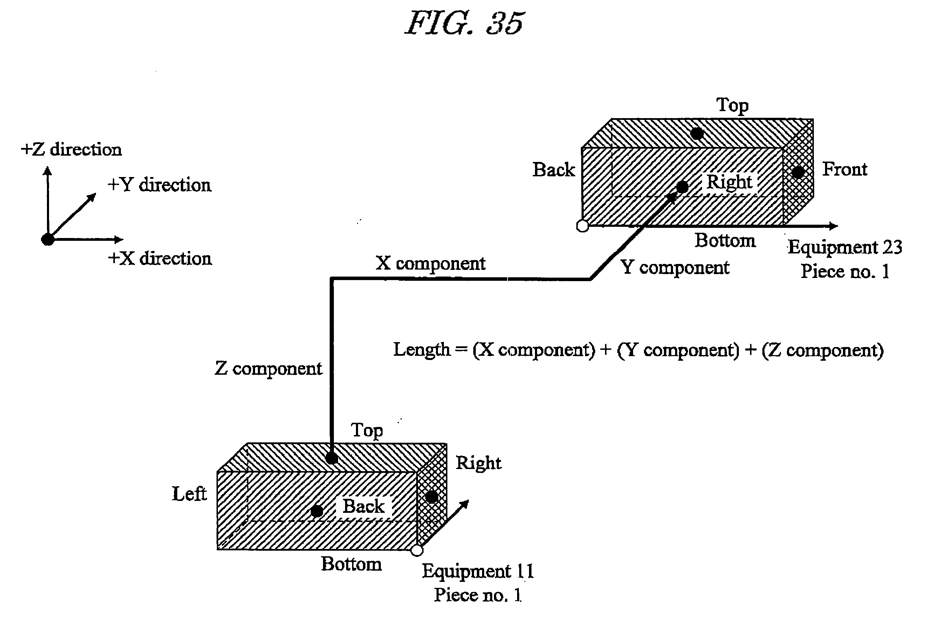

Here, referring to the schematic view shown in Fig. 35, an evaluation value calculation process using a distance and cost of an equipment connection element by the comparison unit 141, is explained.

First, the distance calculation unit 1411, as the following Expression 1 below, calculates the distance of an equipment connection element such as piping, cables, or the like, which is configured by the three components of XYZ (two-dimension in depiction) and connects between equipments, in a manner of calculating the distance for each component, and adds the calculated results to obtain the total length. Here, in relation to surfaces of equipments connected with each other, the distance of from a starting point included in one surface to an ending point included in another surface (See Fit. 35).

[Expression 1]

Length = (X component length) + (Y component length) + (Z component length)

When the distance has been calculated by the distance calculation unit 1411, the cost evaluation value calculation unit 1412, as the following Expression 2 below, calculates an evaluation value by multiplying the distance by a cost per unit length. Note that the cost per unit length is a value to be defined in advance as a connection element attribute, stored as a connection element attribute in the equipment connection element data, and this value can be corrected on the editing screen for connection element.

[Expression 2]

Evaluation value (cost) = (length) x (cost per unit length)

Subsequently, the cost contrast unit 1413 contrasts the evaluation values based on the costs of each layout design data, and outputs the contrast result to the interface unit 110 through the animation unit 142 or the like. Further, the contrast result is stored in a file for each set range. Note that the distance calculation unit 1411 can make not only a calculation using XYZ components but also a calculation using merely XY components. In the latter case, position relation can be simply grasped from XY components.

[2.3.2. Evaluation Calculation Process Using Interference Part Area (or Volume) Calculation]

Next, in relation to each layout design data configuring a past record data set, an example is explained which calculates as evaluation values, the areas of each interference part generated between equipments, or between an equipment and interference prohibition area such as room space, and compares the evaluation values.

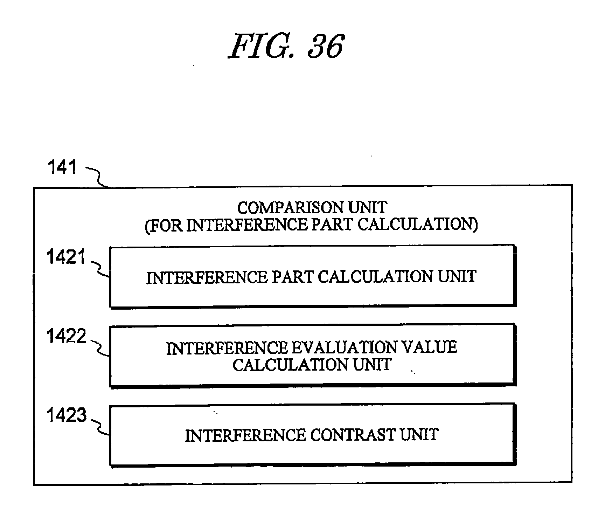

As shown in Fig. 36, the comparison unit 141 comprises an interference part calculation unit 1421 which in relation to each layout design data of a past record data set, calculates the area of an interference part generated between equipments in two-dimension (including the area of an interference part generated between an equipment and an interference prohibition area such as room space, hereinafter the same as this), or the volume of an interference part generated between equipments in three-dimension (including the volume of an interference part generated between an equipment and an interference prohibition area such as room space, hereinafter the same as this).

The comparison unit 141 also comprises an interference evaluation value calculation unit 1422 which adds the area or volume of an interference part between equipments calculated by the interference part calculation unit 1421 for each layout design data, to calculate as an evaluation value the total area or total volume of the interference part for each layout design data. The comparison unit 141 further comprises an interference contrast unit 1423 for contrasting the evaluation value for each layout design data calculated by the interference evaluation value calculation unit 1422.

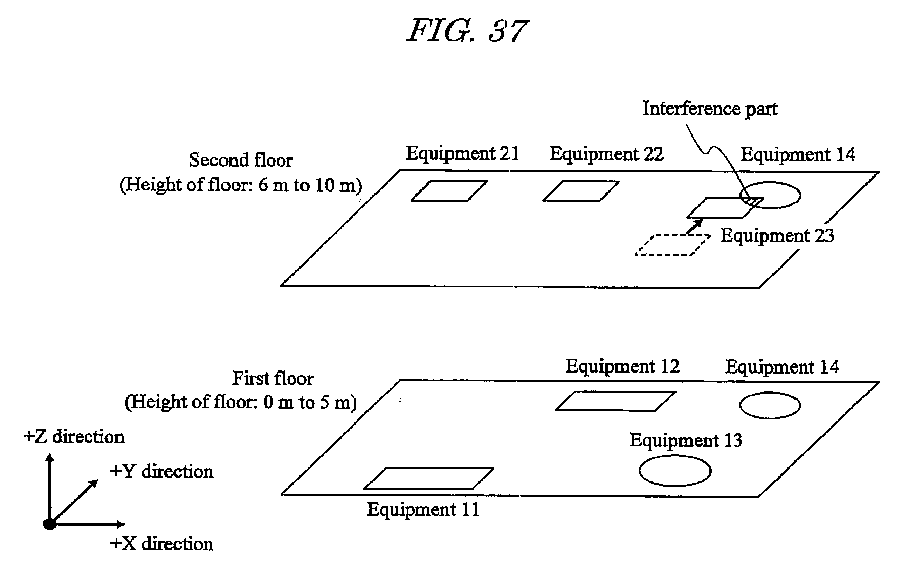

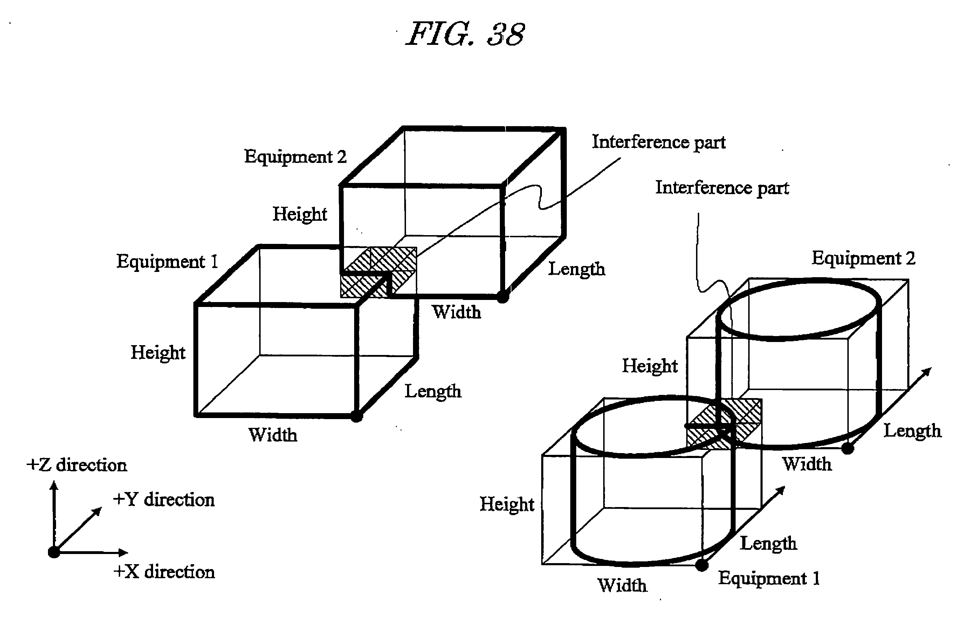

Here, referring to the schematic views of Figs. 37 and 38, an evaluation value calculation process which calculates the area or volume of an interference part for each layout design data by the comparison unit 141, is explained.

Fist, the interference part calculation unit 1421 calculates an interference part between equipments for each floor of a plurality of floors configuring layout design data as shown in Fig. 37. Namely, the interference part calculation unit 1421 calculates an interference part in relation to equipments which exist in a preset range in the vertical direction.

In the example shown in fig. 37, interference parts are calculated respectively for an equipment group of the first floor existing within a height range of 0 to 5 meters, and for an equipment group of the second floor existing within a height range of 6 to 10 meters. Here, in the second floor, the equipment 23 is moved to interfere with the equipment 14, so that the area of the interference part is calculated. On the other hand, in the first floor, no equipment interfere with another equipment, the area of an interference part is zero.

Subsequently, the interference evaluation value calculation unit 1422 calculates as an evaluation value, the total value of the area of an interference part calculated by the interference part calculation unit 1421 for all of the equipments. The interference contrast unit 1423 contrasts the evaluation values calculated for each layout design data, and outputs the contrast result to the interface unit 110 through the animation unit 142 or the like. The same as the other evaluation calculation, the output result can be stored in a file for each set range to be checked later.

Further, Fig. 38 is a schematic view showing the volume of an interference part between equipments when layout design data is recognized in three-dimension. In this case, the same process is performed as the case of calculation in two-dimension, except for calculating the volume of an interference part between equipments, so an explanation for this case is omitted. Note that the interference part calculation unit 1421 converts the external shape of an equipment into a rectangular parallelepiped shape to calculate the volume of an interference part between the equipment and another equipment when the equipment has a cylinder shape.

With this embodiment described above, a layout design support system, method, and program can be provided, which can allow a user to intuitively and comprehensively grasp a concrete route having been designed with taking account of various conditions by displaying the route in two-dimension, and which can design a layout, with displaying a detailed configuration of equipments, and with taking account of connection between equipments in terms of three-dimension and arrangement space of equipments in three-dimension. As a result, the workload of a designer can be reduced in comparison with a case of representing in three-dimension a layout having been depicted in two-dimension.

In addition, in this embodiment, connections between equipments can be recognized in three-dimension, and so that, for example, evaluation calculation can be performed which calculates the total length and cost of piping and cables passing through boundary between floors. Further, interference space between equipments can be recognized in three-dimension, so that interference space inside and outside a building can be calculated as an evaluation value in either case of two-dimension base and three-dimension base. In this way, an evaluation value of a layout having been designed can be calculated in terms of three-dimension, so that a plurality of layout candidates can be compared with each other using results of evaluation calculation according to the same standard, and a more superior layout candidate can be selected as a layout. Therefore, the present invention is suitable for design review duties of layout design.

While certain embodiments of the inventions have been described, these embodiments have been presented by way of example only, and are not intended to limit the scope of the inventions. Indeed, the novel systems, methods and programs described herein may be embodied in a variety of other forms; furthermore, various omissions, substitutions and changes in the form of the systems, methods and programs described herein may be made without departing from the spirit of the inventions. The accompanying claims and their equivalents are intended to cover such forms or modifications as would fall within the scope and spirit of the inventions.

**Claims**

1. A layout design support system for supporting a layout design, including an arrangement of a building and a plurality of equipments within a layout range space of a plant and a connection between said equipments, using a computer, wherein said computer comprises:

an interface unit which inputs various instructions and data and displays various screens;
a layout editing unit which causes said interface unit to display a editing screen for editing layout design data, which include building data relating to a building base line and a building arrangement, equipment arrangement data relating to an arrangement of said equipments, and equipment connection element data relating to a connection between said equipments, accepts an edit instruction input onto said screen, edits said layout design data in accordance with said edit instruction, and causes said interface unit to display a depiction screen of the edited layout design data;
a storage unit which stores said building data, equipment arrangement data and equipment connection element data, and stores a layout design data editing result generated by said layout editing unit; and
a CAD converting unit which converts said layout design data generated by said layout editing unit into a two-dimensional CAD drawing or a three-dimensional CAD model, and causing said interface unit to display said two-dimensional CAD drawing or said three-dimensional CAD model on a screen, and

wherein:

said equipment arrangement data stored in said storage unit includes not only equipment specification data including equipment name and building name, and arrangement coordinate data and size data of each equipment, but also piece number of each piece that configures the equipment having the equipment name, said equipment connection element data stored in said storage unit includes connection name, equipment name of upstream and downstream connection destination equipments, piece number and port of the equipments, and said layout editing unit edits said equipment arrangement data or equipment connection element data at the level of the piece in accordance with an accepted edit instruction.

2. The layout design support system according to claim 1, wherein said layout editing unit comprises:

an editing control unit which causes to display said editing screen including an editing subject item of layout design data and an operation image element for each of said building data, equipment arrangement data, and equipment connection element data, and accepts to edit the layout design data; and a depiction control unit which depicts the layout design data edited by the editing control unit on said depiction screen, and

wherein:

said editing control unit edits layout design data at the piece level, and said depiction control unit depicts the layout design data edited by the editing control unit at the piece level.

3. The layout design support system according to claim 1, wherein said arrangement coordinate data and size data are stored in said storage unit using XYZ components.

4. The layout design support system according to claim 2, wherein said editing control unit causes to display on said editing screen, as the editing subject item within a display range of said depiction screen on which the layout design data is depicted by the depiction control unit, a selecting item for selecting the bottom value and peak value of Z coordinate, in addition to another selecting item for selecting an area on XY coordinates, and accepts input for each selecting item to set the display range.

5. The layout design support system according to claim 2, wherein said editing control unit for equipment connection element data causes to display on said editing screen, as the editing subject items, equipment name of upstream and downstream connection destination equipments, piece number and port of the equipments, and accepts input for the editing subject items to set the equipment name of upstream and downstream connection destination equipments, piece number and port of the equipments.

6. The layout design support system according to claim 5, wherein said editing control unit for equipment connection element data, when setting the port of said upstream and downstream connection destination equipments, accepts input for selecting one surface among the surfaces including top and bottom surfaces in addition to front, back, right and left surfaces to set the selected surface as the port of a piece of the connection destination equipment, and wherein said depiction control unit for equipment connection element data, when depicting said layout design data, depicts the equipment connection element such that the element connects the setup ports of pieces of the upstream and downstream connection destination equipments from the upstream side to the downstream side.

7. The layout design support system according to claim 2, wherein said editing control unit for equipment arrangement data causes to display on said editing screen, the editing subject item for setting an interference prohibition area required for each equipment, in a mode where the item can be set for the six surfaces constituted by front, back, right, left, top and bottom surfaces, and accepts input for the editing subject item to set the interference prohibition area, and wherein said depiction control unit for equipment arrangement data depicts the layout design data of equipment arrangement data including the setup interference prohibition area.

8. The layout design support system according to claim 2,

wherein said depiction control unit, when depicting the layout design data edited by said editing control unit, depicts an equipment such that the equipment is depicted within a display range set on the depiction screen when the equipment is disposed outside the display range and has a connection relation with another equipment disposed within the display range.

9. The layout design support system according to claim 8,
wherein said depiction control unit modifies depiction mode between one equipment disposed outside the display range and the other equipment disposed within the display range.

10. The layout design support system according to claim 1, further comprising:

an evaluation calculation unit which performs an evaluation calculation process, including an evaluation calculation or a repeated optimization calculation of said layout design data, using a preset algorithm, and causes said interface unit to display an obtained calculation result on a screen,
wherein said layout editing unit has evaluation calculation activating unit which causes said evaluation calculation unit to begin said evaluation calculation process in accordance with an editing instruction accepted through an editing subject item or operation image element displayed on said control screen.

11. The layout design support system according to claim 10,
wherein said evaluation calculation unit comprises:

a unit which calculates the length of an equipment connection element configuring the layout design data edited by said layout editing unit; and
a unit which calculates an evaluation value for each layout design data by multiplying the calculated length by a prescribed cost per unit length.

12. The layout design support system according to claim 10,
wherein said evaluation calculation unit comprises:

a unit which calculates the area of an interference part generated between equipments or between an equipment and interference prohibition area, which configure the layout design data edited by said layout editing unit; and
a unit which calculates as an evaluation value, the total value of the area of an interference part between equipments or between an equipment and interference prohibition area, for each layout design data

13. The layout design support system according to claim 10,
wherein said evaluation calculation unit comprises:

a unit which calculates the volume of an interference part generated between equipments or between an equipment and interference prohibition area, which configure the layout design data edited by said layout editing unit; and
a unit which calculates as an evaluation value, the total value of the volume of an interference part between equipments or between an equipment and interference prohibition area, for each layout design data

14. A layout design support method for supporting a layout design, including an arrangement of a building and a plurality of equipments within a layout range space of a plant and a connection between said equipments, using a computer, wherein said computer comprises an interface unit, layout editing unit, storage unit, and CAD converting unit, and wherein said method comprises the steps of:

inputting various instructions and data and displaying various screens using said interface unit;
having said layout editing unit cause said interface unit to display a layout design data editing screen relating to layout design data, which include building data relating to a building base line and a building arrangement, equipment arrangement data relating to an arrangement of said equipments, and equipment connection element data relating to a connection between said equipments, accept an edit instruction input onto said screen, edit said layout design data in accordance with said edit instruction, and cause said interface unit to display a depiction screen of the edited layout design data;
storing in said storage unit, said building data, equipment arrangement data and equipment connection element data, and storing in said storage unit, a layout design data editing result generated by said layout editing unit,

and
wherein:

said equipment arrangement data stored in said storage unit includes not only equipment specification data including equipment name and building name, and arrangement coordinate data and size data of each equipment, but also piece number of each piece that configures the equipment having the equipment name, said equipment connection element data stored in said storage unit includes connection name, equipment name of upstream and downstream connection destination equipments, piece number and port of the equipments, and the step of having said layout editing unit edit said layout design data, includes a step of editing said equipment arrangement data or equipment connection element data at the level of the piece in accordance with an accepted edit instruction.

15. A layout design support program for supporting a layout design, including an arrangement of a building and a plurality of equipments within a layout range space of a plant and a connection between said equipments, using a computer, wherein said computer comprises an interface unit, layout editing unit, storage unit, and CAD converting unit, and wherein said program causes said computer to perform the processes of:

inputting various instructions and data and displaying various screens using said interface unit; having said layout editing unit cause said interface unit to display a layout design data editing screen relating to layout design data, which include building data relating to a building base line and a building arrangement, equipment arrangement data relating to an arrangement of said equipments, and equipment connection element data relating to a connection between said equipments, accept an edit instruction input onto said screen, edit said layout design data in accordance with said edit instruction, and cause said interface unit to display a depiction screen of the edited layout design data; storing in said storage unit, said building data, equipment arrangement data and equipment connection element data, and storing in said storage unit, a layout design data editing result generated by said layout editing unit,

and
wherein:

said equipment arrangement data stored in said storage unit includes not only equipment specification data including equipment name and building name, and arrangement coordinate data and size data of each equipment, but also piece number of each piece that configures the equipment having the equipment name, said equipment connection element data stored in said storage unit includes connection name, equipment name of upstream and downstream connection destination equipments, piece number and port of the equipments, and the process of having said layout editing unit edit said layout design data, includes a process of editing said equipment arrangement data or equipment connection element data at the level of the piece in accordance with an accepted edit instruction.

## FIG. 1

100

**LAYOUT DESIGN SUPPORT SYSTEM**

110

120

**INTERFACE UNIT**

111
**DATA INPUT UNIT**

112
**DATA OUTPUT UNIT**

**LAYOUT EDITING UNIT**

130
**STORAGE UNIT**

131
**BUILDING DATABASE**

132
**EQUIPMENT ARRANGEMENT DATABASE**

133
**EQUIPMENT CONNECTION ELEMENT DATABASE**

134
**EQUIPMENT CONNECTION PATH DATABASE**

135
**USER-SPECIFIED RANGE DATABASE**

121
**BUILDING DATA EDITING UNIT**

122
**EQUIPMENT ARRANGEMENT DATA EDITING UNIT**

123
**EQUIPMENT CONNECTION ELEMENT DATA EDITING UNIT**

124
**EQUIPMENT CONNECTION PATH DATA EDITING UNIT**

125
**USER-SPECIFIED RANGE DATA EDITING UNIT**

140
**EVALUATION CALCULATION UNIT**

141
**COMPARISON UNIT**

142
**ANIMATION UNIT**

126
**EVALUATION CALCULATION ACTIVATING UNIT**

127
**OUTPUT FORMAT SWITCHING UNIT**

128
**DISPLAY RANGE MODIFICATION UNIT**

129
**SCREEN SWITCHING UNIT**

**CAD CONVERSION UNIT**

150

160
**TWO-DIMENSIONAL CAD EQUIPMENT DRAWING SYMBOL DATABASE**

170
**THREE-DIMENSIONAL CAD EQUIPMENT MODEL DATABASE**

## FIG. 2

| Equipment specification information | Coordinate information | Size information | Angle information |
|---|---|---|---|
| Equipment name<br><br>Piece number | X coordinate<br><br>Y coordinate<br><br>Z coordinate | Length (plane)<br><br>Width (plane)<br><br>Height (vertical direction) | Rotation angle |

EP 2 249 268 A2

## FIG. 3

Center of top surface

Left surface

Width

Height

Back surface

( X, Y, Z )
Arrangement coordinates

Center of front surface

Bottom surface

Length

Center of right surface

+Z direction

+Y direction

( 0, 0, 0 )   +X direction

Coordinate origin

*FIG. 4*

START

S401 — IS SELECTION INSTRUCTION OF DATA TYPE OF EDITING SUBJECT INPUT?

NO

YES

S402 — DISPLAY CONTROL SCREEN AND DEPICTION SCREEN FOR INDIVIDUALLY EDITING DATA OF SELECTED DATA TYPE

S403 — IS EDIT INSTRUCTION INPUT ON CONTROL SCREEN?

NO

YES

S404 — REFLECT EDITING RESULT OBTAINED BY CONTROL SCREEN TO DEPICTION SCREEN AND STORE IT IN DATABASE

S405 — IS EVALUATION CALCULATION INSTRUCTION INPUT?

NO

YES

S406 — EVALUATION CALCULATION PROCESSING

S407 — IS CAD CONVERSION INSTRUCTION INPUT?

NO

YES

S408 — CAD CONVERSION PROCESSING

S409 — IS TERMINATION INSTRUCTION OF INDIVIDUAL EDITING INPUT?

NO

YES

S410 — IS TERMINATION INSTRUCTION OF EDITING INPUT?

NO

YES

END

# FIG. 5

500a

(A)

## BUILDING BASE LINE DATA EDITING CONTROL UNIT

511 — BASE LINE DATA EDITING SELECT/DISPLAY FIELD

517 — BASE LINE ADDITION UNIT

512 — BASE LINE NAME SELECT/DISPLAY FIELD

518 — BASE LINE DELETION UNIT

513 — BASE LINE DIRECTION SELECT/DISPLAY FIELD

519 — BASE LINE MOVEMENT UNIT

514 — BASE LINE OFFSET VALUE SELECT/DISPLAY FIELD

520 — BASE LINE UPDATE UNIT

515 — BASE LINE PIECE NUMBER SELECT/DISPLAY FIELD

521 — DISPLAY RANGE SELECT/DISPLAY FIELD

516 — BASE LINE CORRECTION UNIT

522 — VERTICAL DIRECTION DISPLAY RANGE SELECT/DISPLAY FIELD

500b

(B)

## BUILDING ARRANGEMENT DATA EDITING CONTROL UNIT

531 — BUILDING ARRANGEMENT DATA EDITING SELECT/DISPLAY FIELD

536 — BUILDING CORRECTION UNIT

532 — BUILDING NAME SELECT/DISPLAY FIELD

537 — BUILDING ADDITION UNIT

533 — BUILDING ARRANGEMENT SELECT/DISPLAY FIELD

538 — BUILDING DELETION UNIT

534 — BUILDING ARRANGEMENT REFERENCE POINT SELECT/DISPLAY FIELD

539 — BUILDING MOVEMENT UNIT

535 — BUILDING PIECE NUMBER SELECT/DISPLAY FIELD

540 — BUILDING UPDATE UNIT

## *FIG. 6*

600a

(A)

BUILDING BASE LINE DATA DEPICTION CONTROL UNIT

611 READ UNIT

614 DEPICTION UNIT

612 DISPLAY RANGE DECISION UNIT

615 SELECTION DECISION UNIT

613a BASE LINE DECISION UNIT

616 DISPLAY UNIT

600b

(B)

BUILDING ARRANGEMENT DATA DEPICTION CONTROL UNIT

611 READ UNIT

614 DEPICTION UNIT

612 DISPLAY RANGE DECISION UNIT

615 SELECTION DECISION UNIT

613b BUILDING DECISION UNIT

616 DISPLAY UNIT

*FIG. 7*

START

LOOP
(EVERY BASE LINE)

S701
READ BASE LINE RECORD

S702
READ BUILDING NAME IN BASE LINE RECORD

S703
IS BUILDING RANGE SPECIFIED
AS DISPLAY RANGE? — NO

YES

S704
IS BASE LINE DISPOSED
WITHIN BUILDING RANGE?
NO

YES

S705
GENERATE SHAPE OF BASE LINE USING DIRECTION AND
OFFSET VALUE OF BASE LINE

S706
IS BASE LINE NAME SPECIFIED ONE? — NO

YES

S707
DISPLAY BASE LINE IN BOLD WITH VISIBLE AREAS

LOOP

END

## FIG. 8

START

LOOP
(EVERY BUILDING)

S801
READ BUILDING RECORD

S802
READ BUILDING NAME IN BUILDING RECORD

S803
IS BUILDING RANGE SPECIFIED
AS DISPLAY RANGE? — NO

YES

S804
IS BUILDING DISPOSED
WITHIN BUILDING RANGE?

NO

YES

S805
GENERATE SHAPE OF BUILDING USING ARRANGEMENT
COORDINATES AND REFERENCE POINT OF BUILDING

S806
IS BUILDING NAME SPECIFIED ONE? — NO

YES

S807
DISPLAY BUILDING IN BOLD WITH VISIBLE AREAS

LOOP

END

## FIG. 9

# FIG. 10

**(A)**

**1000a**

EQUIPMENT ARRANGEMENT DATA EDITING CONTROL UNIT

| 1011 EQUIPMENT NAME SELECT/DISPLAY FIELD | 1018 EQUIPMENT CORRECTION UNIT |
|---|---|
| 1012 EQUIPMENT ATTRIBUTE EDITING SELECT/DISPLAY FIELD | 1019 EQUIPMENT ADDITION UNIT |
| 1013 EQUIPMENT ARRANGEMENT SELECT/ DISPLAY FIELD | 1020 EQUIPMENT DELETION UNIT |
| 1014 EQUIPMENT SHAPE/DIMENSION SELECT/ DISPLAY FIELD | 1021 EQUIPMENT MOVEMENT UNIT |
| 1015 PARENT BUILDING SELECT/ DISPLAY FIELD | 1022 EQUIPMENT ARRANGEMENT DATA UPDATE UNIT |
| 1016 EQUIPMENT PIECE NUMBER SELECT/DISPLAY FIELD | 1023 DISPLAY RANGE SELECT/DISPLAY FIELD |
| 1017 CAD EQUIPMENT SELECT/ DISPLAY FIELD | 1024 VERTICAL DIRECTION DISPLAY RANGE SELECT/DISPLAY FIELD |

**(B)**

**1000b**

EQUIPMENT ATTRIBUTE DATA EDITING CONTROL UNIT

| 1031 PRODUCT INFORMATION SELECT/DISPLAY FIELD | 1033 NOISE INFORMATION SELECT/DISPLAY FIELD |
|---|---|
| 1032 INTERFERENCE PROHIBITION AREA INFORMATION SELECT/ DISPLAY FIELD | 1034 CONSTRAINT INFORMATION SELECT/ DISPLAY FIELD |

## FIG. 11

1100

**EQUIPMENT ARRANGEMENT DATA DEPICTION CONTROL UNIT**

1111
| READ UNIT |

1114
| DEPICTION UNIT |

1112
| DISPLAY RANGE DECISION UNIT |

1115
| EQUIPMENT NAME DECISION UNIT |

1113
| EQUIPMENT ARRANGEMENT DECISION UNIT |

1116
| DISPLAY UNIT |

*FIG. 12*

```
                    ┌──────────────┐
                    │    START     │
                    └──────┬───────┘
                           ↓
                  ┌────────────────────┐
                  │        LOOP        │
                  │  (EVERY EQUIPMENT) │
                  └─────────┬──────────┘
                            ↓
S1201  ┌───────────────────────────────────────────┐
       │           READ EQUIPMENT RECORD            │
       └────────────────────┬──────────────────────┘
                            ↓
S1202  ┌───────────────────────────────────────────┐
       │      READ BUILDING NAME IN EQUIPMENT RECORD│
       └────────────────────┬──────────────────────┘
```

S1203 — IS BUILDING RANGE SPECIFIED AS DISPLAY RANGE? — NO

YES

S1204 — IS EQUIPMENT DISPOSED WITHIN BUILDING RANGE? — NO

YES

S1205 — GENERATE SHAPE OF EQUIPMENT USING ARRANGEMENT COORDINATES, SIZE, AND ANGLE OF EQUIPMENT

S1206 — IS EQUIPMENT NAME SPECIFIED ONE? — NO

YES

S1207 — DISPLAY EQUIPMENT IN BOLD WITH VISIBLE AREAS

LOOP

END

## FIG. 13

FILE | BL | SCHEMA | ARR | CON | PATH | OUT | SET1 | SET2

Equipment name: EQP01 ▼ Change
Piece no. 1 ▼ | Toy box | Detail setting

Detail name: Generator
Color ▼

Category: EQUIP ▼
Group MAIN ▼ Add Display

Dependent area set ▼

**Arrangement coordinate [mm]**
X ▼ 220500 CL
Y ▼ 60000 ABS
Z ▼ 0 Precise

**Size [mm]**
Length 12500
Width 10000
Height 1000

**Angle [deg]**
Yaw 0 ▼

**Shape**
Quadrangle ▼

← → Select list Here
Add | Correct | Delete | Move

Reference area set 0 ▼
Plan ▼

**Z-direction display range**
Z-bottom ▼ Z-peak ▼

Zoom 75 100

☐ Acquire coordinate from screen  ☐ Bold

Redraw

Evaluation calculation | Satisfaction calculation | End (Q) | Help (H)

EP 2 249 268 A2

# FIG. 14

EP 2 249 268 A2

Equipment attribute

| | |
|---|---|
| Equipment importance | 1 ▼ |
| Equipment movability | 0 ▼ |
| Equipment cost | 1 |
| Unit of equipment cost | USD ▼ |
| Noise pressure level [dBA] | 100 |
| Vendor name | V1 |
| Number of motors | 1 |
| Number of anchor bolts | 10 |
| Number of embedded metal fittings | 10 |

Fluid used for equipment

Main fluid [          ]     Sub fluid [          ]

| | |
|---|---|
| ─ ─ ─ ▲ | ─ ─ ─ ▲ |
| STEAM | STEAM |
| WATER | WATER |
| OIL | OIL |
| AIR ▼ | AIR ▼ |

OK          Cancel (C)

1401

1400

# FIG. 15A

Space for equipment

External shape of equipment

Top

Front

Back

Right

## FIG. 15B

Tolerance A (Interference avoided)
Tolerance B (Interference negotiatable)
Noise range
Rule 1: TEST
Rule 2: Rule name 2
Rule 3: Rule name 3
Rule 4: Rule name 4
Rule 5: Rule name 5
Rule 6: Rule name 6
Rule 7: Rule name 7
Rule 8: (Not defined)
Rule 9: (Not defined)
Rule 10: (Not defined)

☐ Use this rule

Unit is [mm]

Left 0
0

Back 0
0

Front 0
0

Right 0
0

Top 0

Bottom 0

Register    Cancel                    Close

1511      1512      1500

1501

EP 2 249 268 A2

## FIG. 16

Second floor
(Height of floor: 8 m)

First floor
(Height of floor: 0 m)

+Z direction

+Y direction

+X direction

## FIG. 17

1710

1743

1730

1741

1742

EQP01
Piece no. 1

1760

1750    1744

1720 BUILDING

1700

EP 2 249 268 A2

FIG. 18

Equipment 14

Second floor
(Height of floor: 8 m)

Equipment 21    Equipment 22

Equipment 23

Equipment 14

Equipment 12

First floor
(Height of floor: 0 m)

Equipment 13

+Z direction

+Y direction

+X direction

Equipment 11

EP 2 249 268 A2

# FIG. 19

Second floor
(Height of floor: 8 m)

Equipment 21    Equipment 22    Equipment 14

Equipment 23

First floor
(Height of floor: 0 m)

Equipment 12    Equipment 14

Equipment 13

+Z direction

+Y direction

+X direction

Equipment 11

EP 2 249 268 A2

# FIG. 20

(A)  Second floor  (Height: 6 m to 10 m)

Equipment 21     Equipment 22

Equipment 14

Equipment 23

(B)  First floor  (Height: 0 m to 5 m)

Equipment 12

Equipment 14

Equipment 13

Equipment 11

## FIG. 21

**(A)**

Equipment 1
Piece no. 4

Equipment 1
Piece no. 1

Equipment 1
Piece no. 3

Equipment 1
Piece no. 2

Equipment 1
Piece no. 5

**(B)**

Equipment 1
Piece no. 1

Equipment 1
Piece no. 4

Equipment 1
Piece no. 5

Equipment 1
Piece no. 2

Equipment 1
Piece no. 3

# FIG. 22

2200a

(A)

**EQUIPMENT CONNECTION ELEMENT DATA EDITING CONTROL UNIT**

| | | | |
|---|---|---|---|
| 2211 | CONNECTION NAME SELECT/DISPLAY FIELD | 2218 | CONNECTION CORRECTION UNIT |
| 2212 | CONNECTION ATTRIBUTE EDITING SELECT/DISPLAY FIELD | 2219 | CONNECTION ADDITION UNIT |
| 2213 | CONNECTION MODE SELECT/DISPLAY FIELD | 2220 | CONNECTION DELETION UNIT |
| 2214 | CONNECTION LEVEL SELECT/DISPLAY FIELD | 2221 | CONNECTION MOVEMENT UNIT |
| 2215 | CONNECTION DESTINATION EQUIPMENT SELECT/ DISPLAY FIELD | 2222 | EQUIPMENT CONNECTION ELEMENT DATA UPDATE UNIT |
| 2216 | INTERFERENCE ALLOWANCE/PROHIBITION SELECT/DISPLAY FIELD | 2223 | DISPLAY RANGE SELECT/DISPLAY FIELD |
| 2217 | CONNECTION PIECE NUMBER SELECT/DISPLAY FIELD | 2224 | VERTICAL DIRECTION DISPLAY RANGE SELECT/DISPLAY FIELD |

2200b

(B)

**CONNECTION ATTRIBUTE DATA EDITING CONTROL UNIT**

| | | | |
|---|---|---|---|
| 2231 | PRODUCT INFORMATION SELECT/DISPLAY FIELD | 2233 | CONNECTION PATH NAME SELECT/DISPLAY FIELD |
| 2232 | CONSTRAINT INFORMATION SELECT/ DISPLAY FIELD | | |

# FIG. 23

2300

### EQUIPMENT CONNECTION ELEMENT DATA DEPICTION CONTROL UNIT

| | |
|---|---|
| 2311 **READ UNIT** | 2314 **DEPICTION UNIT** |
| 2312 **DISPLAY RANGE DECISION UNIT** | 2315 **CONNECTION NAME DECISION UNIT** |
| 2313 **EQUIPMENT CONNECTION ELEMENT DECISION UNIT** | 2316 **DISPLAY UNIT** |

*FIG. 24*

START

LOOP
(EVERY CONNECTION ELEMENT)

S2401

READ RECORD OF EQUIPMENT CONNECTION ELEMENT

S2402

READ NAME, CONNECTION PIECE NUMBER AND CONNECTION PORT OF CONNECTION DESTINATION EQUIPMENT, AND NAME AND NODES OF CONNECTION PATH IN RECORD OF EQUIPMENT CONNECTION ELEMENT

S2403

IS BUILDING RANGE SPECIFIED AS DISPLAY RANGE?

NO

YES

S2404

IS CONNECTION ELEMENT DISPOSED WITHIN BUILDING RANGE?

NO

YES

S2405

GENERATE SHAPE OF EQUIPMENT CONNECTION ELEMENT USING LENGTH, WIDTH, HEIGHT, AND ARRANGEMENT ANGLE OF CONNECTION ELEMENT, AND NAME, CONNECTION PIECE NUMBER AND CONNECTION PORT OF CONNECTION DESTINATION EQUIPMENT

S2406

IS CONNECTION NAME SPECIFIED ONE?

NO

YES

S2407

DISPLAY CONNECTION ELEMENT IN BOLD WITH VISIBLE AREAS

LOOP

END

## FIG. 25

2511  2513  2501    2514 2516 2512a 2512 2523 2519 2518 2520 2521

| FILE | CL | SCHEMA | ARR | CON | PATH | OUT | SET1 | SET2 |

← → | Select list | Here

Add | Correct | Delete | Move

Connection name: CONN01 ▼ Change

Detail setting

Detail name: Gas tube + Rack

Color ▼

Category: Cable And Rack ▼

Connection level: Close ▼    Interfere: Yes ▼

Reference area set: 0 ▼

Plan ▼

**Upstream connected equipment**

Equip. name: EQP01 ▼   Pc no. 1 ▼

Detail name: Generator

Port: Top ▼    Here

**Downstream connected equipment**

Equip. name: EQP27 ▼   Pc no. 1 ▼

Detail name: Gas cylinder room

Port: Top ▼    Here

Z-direction display range

Z-bottom ▼   Z-peak ▼

Zoom: 75 ▲▼   100 ▲▼

☐ Acquire coordinate from screen    ☐ Bold

Evaluation calculation | Satisfaction calculation | End (Q) | Help (H)

Redraw

2515  2517  2531    2515 2517  2524    2522    2500

EP 2 249 268 A2

## FIG. 26

Cross-section setting

| Cross-section width [mm] | 100 |
| Cross-section height [mm] | 100 |
| Cross-section weight [kg] | 1000 |
| Cross-section cost | 1 |
| Unit of cross-section cost | USD ▼ |

Path setting

| Path name | Path01 ▼ |
| Node no. | 1 ▼ |

2612

OK    Cancel (C)

2611

2600

EP 2 249 268 A2

FIG. 27

EP 2 249 268 A2

# FIG. 28

Equipment 2

Equipment 1

*FIG. 29*

# FIG. 30

Second floor
(Height of floor: 8 m)

Equipment 21    Equipment 22    Equipment 14

Equipment 23

Right

First floor
(Height of floor: 0 m)

Equipment 12    Equipment 14

Equipment 13

Top

Equipment 11

+Z direction

+Y direction

+X direction

# FIG. 31

(A) Second floor (Height: 6 m to 10 m)

Equipment 21    Equipment 22

Equipment 14

Equipment 23

(B) First floor (Height: 0 m to 5 m)

Equipment 12    Equipment 14

Equipment 13

Equipment 11

# FIG. 32

**(A) Second floor (Height: 6 m to 10 m)**

Equipment 21    Equipment 22

Equipment 14

Equipment 23

Equipment 11

**(B) First floor (Height: 0 m to 5 m)**

Equipment 12

Equipment 14

Equipment 23

Equipment 13

Equipment 11

# FIG. 33

Second floor
(Height: 6 m to 10 m)

Equipment 21    Equipment 22    Equipment 14

Equipment 23

Display of height setting: 6 m to 10 m

Second floor
(Height of floor: 8m)

Equipment 21    Equipment 22    Equipment 14

Equipment 23
Right

First floor
(Height of floor: 0m)

Equipment 12    Equipment 14

Top

Equipment 13

Equipment 11

Display of height setting: 0 m to 5 m

First floor
(Height: 0 m to 5 m)

Equipment 12    Equipment 14

Equipment 13

Equipment 11

EP 2 249 268 A2

# FIG. 34

141

COMPARISON UNIT
(FOR COST CALCULATION)

1411    DISTANCE CALCULATION UNIT

1412    COST EVALUATION VALUE CALCULATION UNIT

1413    COST CONTRAST UNIT

# FIG. 35

+Z direction

+Y direction

+X direction

Top

Back                    Right          Front

Bottom                    Equipment 23
                          Piece no. 1

X component          Y component

Length = (X component) + (Y component) + (Z component)

Z component

Top

Right

Left        Back

Bottom      Equipment 11
            Piece no. 1

EP 2 249 268 A2

# FIG. 36

141

COMPARISON UNIT
(FOR INTERFERENCE PART CALCULATION)

1421

INTERFERENCE PART CALCULATION UNIT

1422

INTERFERENCE EVALUATION VALUE
CALCULATION UNIT

1423

INTERFERENCE CONTRAST UNIT

## FIG. 37

Second floor
(Height of floor: 6 m to 10 m)

Equipment 21    Equipment 22    Interference part    Equipment 14

Equipment 23

First floor
(Height of floor: 0 m to 5 m)

Equipment 12    Equipment 14

Equipment 13

+Z direction

+Y direction

+X direction

Equipment 11

EP 2 249 268 A2

FIG. 38

**EP 2 249 268 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009107935 A